# EUROPEAN PATENT APPLICATION

(11) **EP 4 576 844 A1**
(43) Date of publication of application: **25.06.2025**
(21) Application number: 23219169.2
(22) Date of filing: 21.12.2023
(51) Int. Cl.: H04W 4/80, H04W 4/40, H04W 28/20, H04W 16/14, H04W 72/0453, H04W 72/12, H04W 12/03, H04W 84/12

(54) **TECHNIQUES TO SECURE WIRELESS INTERNET OF THINGS DEVICES**

(71) Applicant: INTEL Corporation, Santa Clara, CA 95054 (US)
(72) Inventor: Mueck, Markus Dominik, 82008 Unterhaching (DE); Baltar, Leonardo Gomes, 80804 Munich (DE); Roman, John, Hillsboro, 97124 (US); El Hajj, Walid, 06600 Antibes (FR)
(74) Representative: Goddar, Heinz J.

(57) **Abstract**

Techniques to secure wireless Internet of Things (IoT) devices are described. In one embodiment, a method comprises initiating scanning of a first frequency band used by a wireless digital key, the wireless digital key capable of communication with an electronic control unit (ECU) of a vehicle; detecting an indication of the wireless digital key operating in the first frequency band to communicate with the ECU of the vehicle; and generating a first instruction for the wireless digital key or a wireless device within a defined geographic area to switch from a first frequency range to a second frequency range. Other embodiments are described and claimed.

## Description

### BACKGROUND

The Internet of Things (IoT) refers to the interconnected network of physical devices, vehicles, appliances, and other objects embedded with sensors, software, and network connectivity, enabling them to collect and exchange data. In some cases, the IoT devices are wireless devices communicating via wireless signals. This network of interconnected devices allows for the seamless integration of various technologies, enabling smart communication, automation, and data-driven decision-making. With the IoT, devices can be remotely controlled and monitored, enabling improved efficiency, convenience, and creating new opportunities for innovation across industries such as healthcare, agriculture, transportation, and more.

### BRIEF DESCRIPTION OF THE SEVERAL VIEWS OF THE DRAWINGS

To easily identify the discussion of any particular element or act, the significant digit or digits in a reference number refer to the figure number in which that element is first introduced.
FIG. 1 illustrates an example of a wireless system in accordance with one embodiment.
FIG. 2 illustrates an example of a wireless system in accordance with one embodiment.
FIG. 3 illustrates an example of a wireless system in accordance with one embodiment.
FIG. 4 illustrates an example of a wireless system in accordance with one embodiment.
FIG. 5 illustrates an example of a wireless system in accordance with one embodiment.
FIG. 6 illustrates an example of an information element in accordance with one embodiment.
FIG. 7 illustrates an example of a wireless system in accordance with one embodiment.
FIG. 8A illustrates an example of a message flow in accordance with one embodiment.
FIG. 8B illustrates an example of a message flow in accordance with one embodiment.
FIG. 8C illustrates an example of a message flow in accordance with one embodiment.
FIG. 9 illustrates an example of a wireless system in accordance with one embodiment.
FIG. 10 illustrates an example of a logic flow in accordance with one embodiment.
FIG. 11 illustrates an example of a logic flow in accordance with one embodiment.
FIG. 12 illustrates computer readable medium in accordance with one embodiment.
FIG. 13 illustrates a computer system in accordance with one embodiment.
FIG. 14 illustrates a communications system in accordance with one embodiment.

### DETAILED DESCRIPTION

Embodiments disclosed herein are directed to improved wireless communication systems for wireless devices, such as IoT devices, for example. Advantageously, embodiments are generally directed to co-existence and interference mitigation techniques to allow different wireless devices, including IoT devices and non-IoT devices, within physical proximity to each other to reduce or eliminate interference when sharing a common frequency spectrum. Specifically, embodiments are directed to co-existence techniques to allow IoT devices, such as digital keys for vehicles, to operate in frequency ranges shared with different wireless devices for wireless communications systems. By ensuring proper co-existence and reducing interference, wireless communication systems can operate concurrently and efficiently, providing users with seamless connectivity and optimal performance.

Embodiments are particularly directed to co-existence techniques for sharing frequency spectrum. In one embodiment, for example, the shared frequency spectrum is for Ultra-Wideband (UWB) communications. However, embodiments are not limited to co-existence techniques for UWB communications, and any frequency spectrum may be shared using the co-existence techniques described herein.

UWB is a wireless communication technology that utilizes a wide frequency spectrum to transmit data. Unlike traditional wireless communication technologies that operate within specific frequency bands, UWB operates across a very wide range of frequencies, often spanning several gigahertz (GHz). UWB technology uses short-duration pulses or waveforms to transmit data. These pulses have very low power levels, spread over a large frequency range. By spreading the energy across a wide frequency spectrum, UWB signals exhibit characteristics that allow them to coexist with other wireless technologies without causing significant interference. UWB offers several advantages in telecommunications, including high data rates, low power consumption, and the ability to penetrate obstacles such as walls and other physical barriers. It is capable of providing precise ranging and positioning capabilities, making it useful for applications like indoor localization, object tracking, and short-range wireless communication. Due to its wide frequency range and low power spectral density, UWB is often used for applications requiring high data transfer rates, low-latency communications, and robust performance in challenging environments.

The cellular industry is currently in the process of requesting an International Mobile Telecommunications (IMT) allocation in the UWB frequency spectrum, such as the 6 GHz band, for example. IMT refers to a set of global standards for mobile communications established by the International Telecommunication Union (ITU). Further, the Wireless Fidelity (Wi-Fi) industry is requesting countries to allocate the 6 GHz band for unlicensed use, which has already been adopted in several countries. This would allow for an allocation of Third Generation Partnership Project (3GPP) based cellular wireless communication systems in the 6 GHz band as well.

At the same time, however, the vehicular industry has been using the 6 GHz band for wireless Car Keys in Europe following the Electronic Communications Committee (ECC) European Conference of Postal and Telecommunications Administrations (CEPT) Decision (6)04 titled "The Harmonized use, exemption from individual licensing and free circulation of devices using Ultra-Wideband (UWB) technology in bands below 10.6 GHz," published in 2006. This decision allows the automotive industry to use the 6 GHz band to enable and secure the wireless keyless entry function for classical key fobs and "Digital Keys." In particular, wireless keyless entry techniques for vehicles primarily use UWB channel 5 in the 6.240 - 6.739 GHz range, which is part of the standardized protocol for digital keys. Classical key fobs may also use UWB channel 6 in the 6739.2 - 7238.4 megahertz (MHz) range and UWB channel 8 in the 7238.4 - 7737.6 MHz range. Since 2018, there are more than 20 million vehicles in the market using wireless keyless entry based on UWB technology with deployments still continuing. It is a major innovation in the automotive industry and a feature that consumers expect in their cars. The automotive industry also believes that digital keys could move to UWB channel 9 in the 7737.6 - 8236.8 MHz range as a fallback, and therefore opposes any agenda item for IMT in the 7-24 GHz range. However, the classical key fobs already deployed in millions of cars do not have a fallback solution and therefore will continue to rely on UWB channels in the upper 6 GHz band.

To exacerbate this challenge, wireless keyless entry techniques rely on UWB channels on a non-interference and non-protection basis. With the increasing number of wireless devices and technologies, co-existence and interference mitigation becomes crucial to ensure efficient and reliable communication. IMT adoption of UWB frequencies would create harmful interference with other wireless devices operating in the same UWB frequency bands. Interference occurs when the signals from one wireless device or system disrupt or degrade the signals of another device or system operating in the same frequency range. Interference can result in reduced signal quality, data errors, dropped calls, or even complete loss of communication. As a result, IMT adoption of UWB frequencies would cause mass deployed car keys disfunction. This situation could lead to situations where the public safety is threatened, and more broadly would likely lead to public dissatisfaction, since millions of digital keys will stop operating correctly any more after deployment of IMT services in UWB frequency spectrum. Consequently, IMT adoption of UWB channels will necessitate implementation of co-existence techniques to mitigate interference and allow different wireless devices to share the same frequency spectrum harmoniously to ensure continued successful operation of IoT devices, such as digital keys for wireless keyless access, among other IoT devices.

To solve these and other challenges, embodiments are generally directed to co-existence techniques to allow different wireless devices to operate within the same frequency spectrum. Specifically, embodiments are directed to co-existence techniques to allow different IOT devices, such as wireless digital keys, to operate in the UWB frequency ranges. In one embodiment, for example, a wireless digital key may operate in compliance with the Institute of Electrical and Electronics Engineers (IEEE) 802.15.4 family of standards, such as the IEEE 802.15.4 standard titled [INSERT CITE] ("IEEE 802.15.4 Standard"). The IEEE 802.15.4 Standard is a wireless communication standard specifically designed for low-power, low-data-rate, and short-range networks. It defines the physical and media access control (MAC) layers for wireless devices, enabling them to communicate with each other in a reliable and energy-efficient manner. This standard is commonly used in applications such as wireless sensor networks, industrial automation, smart home devices, and other IoT applications. It operates in the 2.4 GHz ISM band (Industrial, Scientific, and Medical) and utilizes frequency-shift keying (FSK) or offset quadrature phase-shift keying (O-QPSK) modulation. IEEE 802.15.4 networks are often characterized by their low power consumption, enabling devices to operate for extended periods using battery power. They also offer low latency and support for mesh networking, allowing devices to relay data through neighboring nodes to extend the network's range. Overall, the IEEE 802.15.4 standard provides a framework for the development of low-power wireless networks with focus on efficiency, reliability, and cost-effectiveness.

Embodiments may implement co-existence techniques that range from advanced modulation schemes, power control mechanisms, frequency planning, signal processing algorithms, or frequency switching algorithms that help minimize interference and improve overall system performance. In one embodiment, for example, wireless systems may scan for wireless digital key operation in UWB channels and when found implement various co-existence measures, such as moving wireless system operations in proximity to the wireless digital keys to some other frequency bands or frequency channels. In another example, wireless digital keys may implement co-existence schemes, such as periodically sending a specific beacon signal or a request for a nearby wireless system to change frequency channels. Wireless systems, such as 3GPP cellular systems, would be able to use a more sensitive preamble-based detection approach to identify the presence of wireless digital keys. These and other co-existence solutions will allow deployment of IMT services in the UWB frequency bands while simultaneously protecting operations of legacy and new wireless digital keys. This will lead to earlier market opportunities for IMT deployment. By ensuring proper co-existence and minimizing interference, wireless communication systems can operate concurrently and efficiently, providing users with seamless connectivity and optimal performance.

The following description and the drawings illustrate specific aspects to enable those skilled in the art to practice them. Other aspects may incorporate structural, logical, electrical, process, and other changes. Portions and features of some aspects may be included in, or substituted for, those of other aspects, and are intended to cover available equivalents of the elements described.

The word "example" is used herein to mean "serving as an example, instance, or illustration." Any aspect or design described herein as "example" is not to be construed as preferred or advantageous over other aspects or designs.

The words "plurality" and "multiple" in the description or the claims expressly refer to a quantity greater than one. The terms "group (of)," "set (of)," "collection (of)," "series (of)," "sequence (of)," "grouping (of)," etc., and the like in the description or in the claims refer to a quantity equal to or greater than one, i.e. one or more. Any term expressed in plural form that does not expressly state "plurality" or "multiple" likewise refers to a quantity equal to or greater than one. The terms "proper subset," "reduced subset," and "lesser subset" refer to a subset of a set that is not equal to the set, i.e. a subset of a set that contains less elements than the set.

It is appreciated that any vector or matrix notation utilized herein is example in nature and is employed solely for purposes of explanation. Accordingly, it is understood that the approaches detailed in this disclosure are not limited to being implemented solely using vectors or matrices, and that the associated processes and computations may be equivalently performed with respect to sets, sequences, groups, etc., of data, observations, information, signals, samples, symbols, elements, etc. Furthermore, it is appreciated that references to a "vector" may refer to a vector of any size or orientation, e.g. including a 1 × 1 vector (e.g. a scalar), a 1×M vector (e.g. a row vector), and an M×1 vector (e.g. a column vector). Similarly, it is appreciated that references to a "matrix" may refer to matrix of any size or orientation, e.g. including a 1×1 matrix (e.g. a scalar), a 1×M matrix (e. g. a row vector), and an M×1 matrix (e.g. a column vector).

As used herein, the term "software" includes any type of executable instruction or set of instructions, including embedded data in the software. Software may also encompass firmware. Software may create, delete or modify software, e.g., through a machine learning process.

A "module" as used herein is understood to include any kind of functionality-implementing entity, which may include hardware-defined modules such as special-purpose hardware, software-defined modules such as a processor executing software or firmware, and mixed modules that include both hardware-defined and software-defined components. A module may thus be an analog circuit or component, digital circuit, mixed-signal circuit or component, logic circuit, processor, microprocessor, Central Processing Unit (CPU), application processor, Graphics Processing Unit (GPU), Digital Signal Processor (DSP), Field Programmable Gate Array (FPGA), integrated circuit, discrete circuit, Application Specific Integrated Circuit (ASIC), etc., or any combination thereof. Any other kind of implementation of the respective functions which will be described below in further detail may also be understood as a "module". It is understood that any two (or more) of the modules detailed herein may be realized as a single module with substantially equivalent functionality, and conversely that any single module detailed herein may be realized as two (or more) separate modules with substantially equivalent functionality. Additionally, references to a "module" may refer to two or more modules that collectively form a single module.

The term "terminal device" utilized herein includes user-side devices (both mobile and immobile) that may connect to a core network and various external networks via a radio access network. The term "network access node" as utilized herein includes to a network-side device that provides a radio access network with which terminal devices may connect and exchange information with other networks through the network access node.

The term "base station" used in reference to an access node of a mobile communication network may be understood to include a macro base station (such as, for example, for cellular communications), micro/pico/femto base station, Node B, evolved Node-B (base station), Home base station, Remote Radio Head (RRH), relay point, access point (AP, such as, for example, for Wi-Fi, WLAN, WiGig millimeter Wave (mmWave), etc.) etc. As used herein, a "cell" in the setting of telecommunications may be understood to include an area (e.g., a public place) or space (e.g., multi-story building or airspace) served by a base station or access point. The base station may include mobile, e.g., installed in a vehicle, and the covered area or space may move accordingly. Accordingly, a cell may be covered by a set of co-located transmit and receive antennas, each of which also able to cover and serve a specific sector of the cell. A base station or access point may serve one or more cells, where each cell is characterized by a distinct communication channel or standard (e.g., a base station offering 2G, 3G and LTE services). Macro-, micro-, femto-, pico-cells may have different cell sizes and ranges, and may be static or dynamic (e.g., a cell installed in a drone or balloon) or change its characteristic dynamically (for example, from macrocell to picocell, from static deployment to dynamic deployment, from omnidirectional to directional, from broadcast to narrowcast). Communication channels may include narrowband or broadband. Communication channels may also use carrier aggregation across radio communication technologies and standards, or flexibly adapt bandwidth to communication applications. In addition, terminal devices may include or act as base stations or access points or relays or other network access nodes.

The term "network" as utilized herein, for example, in reference to a communication network such as a mobile communication network, encompasses both an access section of a network (e.g., a radio access network (RAN) section) and a core section of a network (e.g., a core network section), but also, for an end-to-end system, encompasses mobile (including peer-to-peer, device to device, or machine to machine communications), access, backhaul, server, backbone and gateway/interchange elements to other networks of the same or different type. The term "radio idle mode" or "radio idle state" used herein in reference to a mobile terminal refers to a radio control state in which the mobile terminal is not allocated one dedicated communication channel of a mobile communication network. The term "radio connected mode" or "radio connected state" used in reference to a mobile terminal refers to a radio control state in which the mobile terminal is allocated one dedicated uplink communication channel of a mobile communication network. The uplink communication channel may be a physical channel or a virtual channel. Idle or connection mode may be connection-switched or packet-switched.

Unless explicitly specified, the term "transmit" encompasses both direct (point-to-point) and indirect transmission (via one or more intermediary points or nodes). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of logical data over a software-level connection). For example, a processor may transmit or receive data in the form of radio signals with another processor, where the physical transmission and reception is handled by radio-layer components such as RF transceivers and antennas, and the logical transmission and reception is performed by the processor. The term "communicate" encompasses one or both of transmitting and receiving i.e. unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

Any of the radio links described herein may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP Rel. 19 (3rd Generation Partnership Project Release 19) and subsequent Releases (such as Rel. 20, Rel. 21, etc.), 3GPP 5G, 5G, 3GPP 6G, 6G, 6^{th} Generation Cellular Networks, 5GNew Radio (5GNR), 3GPP 5G New Radio, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth(r), Radio Local Area Networks (RLAN), Wi-Fi (based on IEEE802.11 and/or IEEE 802.11b (Wi-Fi 1) and/or IEEE 802.11a (Wi-Fi 2) and/or IEEE 802.11g (Wi-Fi 3) and/or 802.11n (Wi-Fi 4) and/or IEEE 802.11ac (Wi-Fi 5) and/or IEEE 802.11ax (Wi-Fi 6) and/or IEEE802.11be (Wi-Fi 7) and/or any follow-up WiFi related technology), Wireless Gigabit Alliance (WiGig) standard, mmWave standards in general (wireless systems operating at 10-300 GHz and above such as WiGig, IEEE 802.11ad, IEEE 802.1 lay, etc.), technologies operating above 300 GHz and THz bands, (3GPP/LTE based or IEEE 802.11p or IEEE 802.1 1bd and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others (typically operating in 5850 MHz to 5925 MHz or above (typically up to 5935 MHz following change proposals in CEPT Report 71)), the European ITS-G5 system (i.e. the European flavor of IEEE 802.11p based DSRC, including ITS-G5A (i.e., Operation of ITS-G5 in European ITS frequency bands dedicated to ITS for safety related applications in the frequency range 5,875 GHz to 5,905 GHz), ITS-G5B (i.e., Operation in European ITS frequency bands dedicated to ITS non- safety applications in the frequency range 5,855 GHz to 5,875 GHz), ITS-G5C (i.e., Operation of ITS applications in the frequency range 5,470 GHz to 5,725 GHz)), DSRC in Japan in the 700MHz band (including 715 MHz to 725 MHz), IEEE 802.1 1bd based systems, etc.

Aspects described herein can be used in the context of any spectrum management scheme including dedicated licensed spectrum, unlicensed spectrum, license exempt spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System / CBRS = Citizen Broadband Radio System in 3.55-3.7 GHz and further frequencies). Applicable spectrum bands include IMT (International Mobile Telecommunications) spectrum as well as other types of spectrum/bands, such as bands with national allocation (including 450 - 470 MHz, 1302-928 MHz (note: allocated for example in US (FCC Part 15)), 863-868.6 MHz (note: allocated for example in European Union (ETSI EN 500 222)), 915.9-929.7 MHz (note: allocated for example in Japan), 917-923.5 MHz (note: allocated for example in South Korea), 755-779 MHz and 779-787 MHz (note: allocated for example in China), 790 - 960 MHz, 1710 - 2025 MHz, 2110 - 2200 MHz, 2300 - 2400 MHz, 2.4-2.4835 GHz (note: it is an ISM band with global availability and it is used by Wi-Fi technology family (11b/g/n/ax) and also by Bluetooth), 2500 - 2690 MHz, 698-790 MHz, 810 - 790 MHz, 3400 - 3600 MHz, 3400 - 3800 MHz, 3800 - 4200 MHz, 3.55-3.7 GHz (note: allocated for example in the US for Citizen Broadband Radio Service), 5.15-5.25 GHz and 5.25-5.35 GHz and 5.47-5.725 GHz and 5.725-5.85 GHz bands (note: allocated for example in the US (FCC part 15), consists four U-NII bands in total 500 MHz spectrum), 5.725-5.875 GHz (note: allocated for example in EU (ETSI EN 301 893)), 5.47-5.65 GHz (note: allocated for example in South Korea, 5925-7125 MHz and 5925-6425MHz band (note: under consideration in US and EU, respectively. Next generation Wi-Fi system is expected to include the 6 GHz spectrum as operating band but it is noted that, as of December 2017, Wi-Fi system is not yet allowed in this band. Regulation is expected to be finished in 2019-2020 time frame), IMT-advanced spectrum, IMT-2020 spectrum (expected to include 3600-3800 MHz, 3800 - 4200 MHz, 3.5 GHz bands, 1200 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), 57-64/66 GHz (note: this band has near-global designation for Multi-Gigabit Wireless Systems (MGWS)/WiGig . In US (FCC part 15) allocates total 14 GHz spectrum, while EU (ETSI EN 502 567 and ETSI EN 301 217-2 for fixed P2P) allocates total 9 GHz spectrum), the 70.2 GHz - 71 GHz band, any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications.

Aspects described herein can also implement a hierarchical application of the scheme is possible, e.g. by introducing a hierarchical prioritization of usage for different types of users (e.g., low/medium/high priority, etc.), based on a prioritized access to the spectrum e.g. with highest priority to tier-1 users, followed by tier-2, then tier-3, etc. users, etc.

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.].

Some of the features in this document are defined for the network side, such as Access Points, eNodeBs, New Radio (NR) or next generation Node Bs (gNodeB or gNB - note that this term is typically used in the context of 3GPP fifth generation (5G) communication systems), etc. Still, a User Equipment (UE) may take this role as well and act as an Access Points, eNodeBs, gNodeBs, etc. I.e., some features defined for network equipment may be implemented by a UE.

As used herein, the term "circuitry" may refer to, be part of, or include a circuit, an integrated circuit (IC), a monolithic IC, a discrete circuit, a hybrid integrated circuit (HIC), an Application Specific Integrated Circuit (ASIC), an electronic circuit, a logic circuit, a microcircuit, a hybrid circuit, a microchip, a chip, a chiplet, a chipset, a multi-chip module (MCM), a semiconductor die, a system on a chip (SoC), a processor (shared, dedicated, or group), a processor circuit, a processing circuit, or associated memory (shared, dedicated, or group) operably coupled to the circuitry that execute one or more software or firmware programs, a combinational logic circuit, or other suitable hardware components that provide the described functionality. In some embodiments, the circuitry may be implemented in, or functions associated with the circuitry may be implemented by, one or more software or firmware modules. In some embodiments, circuitry may include logic, partially operable in hardware.

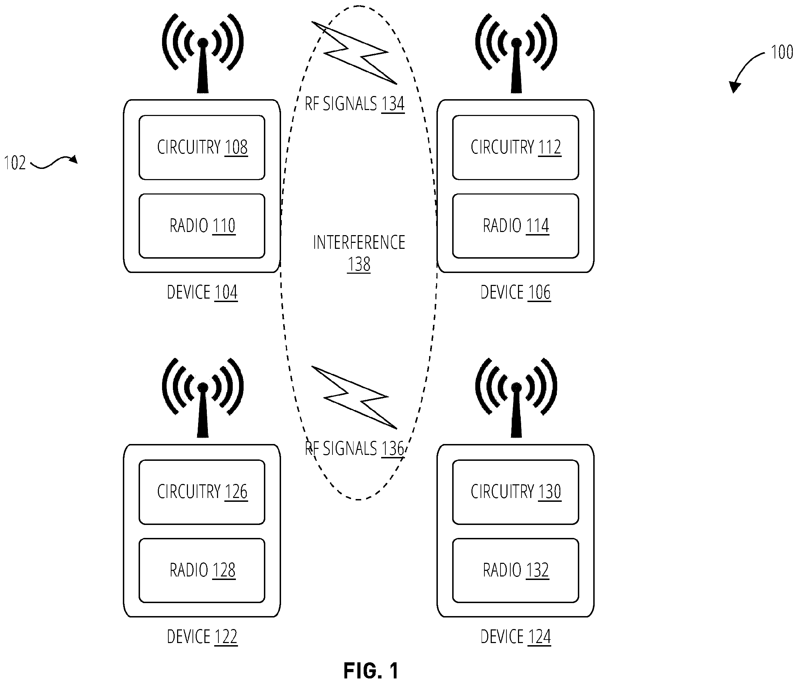

FIG. 1 illustrates a wireless system 100. The wireless system 100 may comprise a set of *N* wireless devices 102, where *N* is any positive integer. In the example shown in the wireless system 100, there are 4 wireless devices (*N* = 4), such as device 104, device 106, device 122, and device 124. Each wireless device may comprise, among other components, circuitry and a radio. For example, device 104 includes circuitry 108 and a radio 110, device 106 includes circuitry 112 and a radio 114, device 122 includes circuitry 126 and a radio 128, and device 124 includes circuitry 130 and a radio 132. Although the wireless system 100 depicts four wireless devices as an example, it may be appreciated that the wireless system 100 may comprise any number of wireless devices in actual implementation. Embodiments are not limited in this context.

The wireless devices 102 may comprise any electronic device that uses wireless technologies for communications and connectivity. Examples of wireless devices encompass a wide range of portable and connected gadgets that use wireless technologies for communication and connectivity. Smartphones provide mobile voice calls, messaging, internet access, and applications. Laptops and tablets use wireless network adapters to connect to Wi-Fi networks for internet access. Smartwatches connect to smartphones for notifications and fitness tracking. Wireless headphones provide cord-free listening, while wireless printers allow printing without physical cables. Smart TVs connect to the internet wirelessly for streaming and other smart features. Wireless security cameras and home automation devices utilize wireless technology for video transmission and remote control. Additionally, wireless speakers, GPS devices, IoT devices, and a multitude of other wireless devices continue to enhance our daily lives with their convenience and versatility.

As depicted in FIG. 1, the radio 110 and the radio 114 of the device 104 and the device 106, respectively, are capable of communicating information with each other using a first set of communication resources such as radio frequency (RF) spectrum (or "frequency spectrum") to communicate RF signals 134. Similarly, the radio 128 and the radio 132 of the device 122 and the device 124, respectively, are capable of communicating information with each other using a second set of communication resources such as RF spectrum to communicate RF signals 136. The first set of communication resources are different from the second set of communication resources.

In some embodiments, the device 104 and the device 106 are devices operating in a first communication system using wireless communication technology defined by a first set of wireless standards. For example, the first set of wireless standards may specify communications over shorter distances, such as a UWB system, wireless personal area networks (WPANs), real-time location systems (RTLS), wireless USB, wireless HDMI, Bluetooth networks, Zigbee networks, and other short-range communication systems. Further, the device 122 and the device 124 are devices operating in a second communication system using wireless communication technology defined by a second set of wireless standards different from the first wireless standards. For example, the second set of wireless standards may specify communications over longer distances relative to the first set of wireless standards, such as 2G networks (GSM), 3G networks (UTMS), 4G networks (LTE), 5G networks, 6G networks, wireless local area networks (WLANs), Wi-Fi networks, and other long-range communication systems. Embodiments are not limited to these examples.

Generally, the first set of wireless standards and the second set of wireless standards may use different communication resources, such as frequency bands, frequency ranges, or frequency channels (hereinafter referred to as "frequency bands") of the RF spectrum. In some cases, however, there may be some overlap in the frequency bands. For example, a higher frequency in a frequency band of a UWB system may overlap with a lower frequency in a frequency band of a 3GPP, IMT, or Wi-Fi system. During simultaneous operations for the wireless devices of the wireless system 100 using shared frequency bands, there is a potential for destructive interference 138 that cancels out one or both of the RF signals 134 and RF signals 136. Destructive interference in wireless communications refers to a phenomenon where two or more wireless signals combine in such a way that their amplitudes cancel each other out, resulting in a weaker or disrupted signal. When two waves of opposite phases meet, they can interfere destructively and reduce the overall signal strength. In wireless communications, destructive interference can occur due to various factors, such as multipath propagation. Multipath propagation happens when signals take multiple paths to reach the receiver, reflecting off objects or bouncing off surfaces. If the signals arrive at the receiver with slightly different delays and phases, they may interfere with each other destructively, causing signal degradation or complete loss. Destructive interference can lead to issues like faded signals, weakened reception, or data corruption.

In the event of interference 138, one or more of the wireless devices of the wireless system 100 may implement co-existence techniques to mitigate the effects of destructive interference. Co-existence techniques such as antenna diversity, adaptive equalization, and error-correcting codes can be employed in wireless communication systems. Additionally, or alternatively, co-existence techniques such as frequency switching or frequency puncturing may be implemented by one or more of the wireless devices of the wireless system 100. The co-existence techniques help improve the signal quality and maintain reliable communication even in the presence of interference 138.

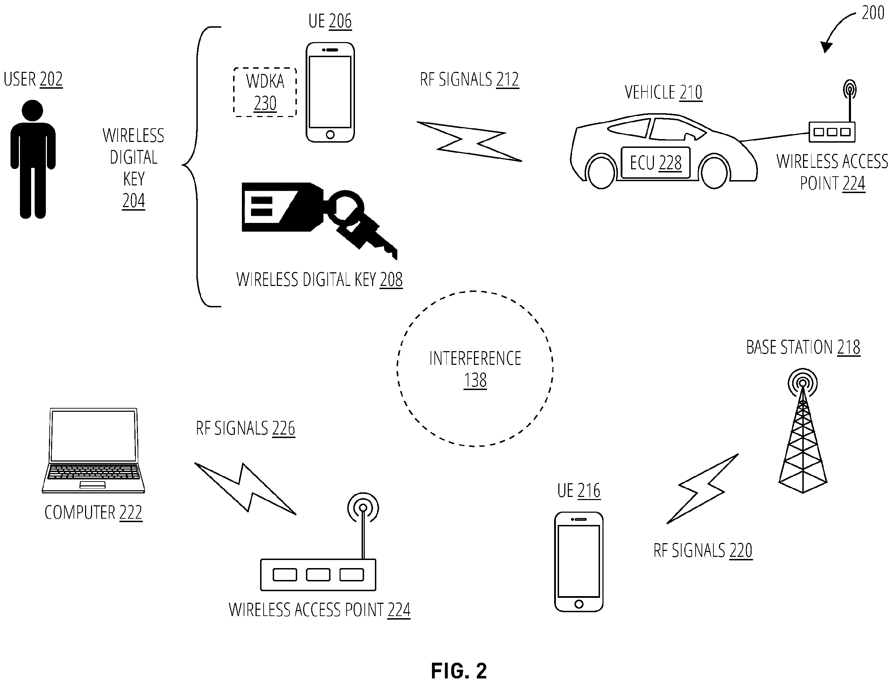

FIG. 2 illustrates a wireless system 200 as a specific example for the wireless system 100. As discussed with reference to FIG. 1, the wireless system 100 may comprise various wireless devices capable of generating RF signals 134 and RF signals 136. Wireless system 200 provides some examples for the wireless devices introduced in FIG. 1.

As previously discussed, the device 104 and the device 106 are devices operating in a first communication system using wireless communication technology defined by a first set of wireless standards, while the device 122 and the device 124 are devices operating in a second communication system using wireless communication technology defined by a second set of wireless standards different from the first wireless standards.

As depicted in the wireless system 200, an example for the device 104 is a wireless digital key 204. Examples for the wireless digital key 204 may include a wireless digital key 208 or a UE 206 with a wireless digital key application 230, for example. An example for the device 106 is an electronic control unit (ECU) 228 for an in-vehicle network (IVN) of a vehicle 210. The ECU 228 may control various physical or logical properties for the vehicle 210, such as controlling door locks for accessing the vehicle 210, an ignition starter to start the vehicle 210 for operations, enable of disable an alarm to issue audible sounds from a speaker of the vehicle 210, and so forth. In this case, for example the radio 110 and the radio 114 may communicate RF signals 212 to the ECU 228 of the vehicle 210 using any suitable short-range frequency bands, such as UWB frequency bands, in order to control operations for the ECU 228 of the vehicle 210.

Additionally, or alternatively, the vehicle 210 may also implement a wireless access point 224 for an IEEE 802.11 (Wi-Fi) system. In this case, the radio 128 and the radio 132 may communicate RF signals 226 using Wi-Fi frequency bands. Embodiments are not limited to these examples.

As further depicted in the wireless system 200, an example of the device 122 is a UE 206 and an example of the device 124 is a base station 218 (e.g., an eNB or gNB) for a 3GPP 5G or 6G cellular system. In this case, the radio 128 and the radio 132 may communicate RF signals 220 using 3GPP or IMT frequency bands. Another example for the device 122 is a computer 222 and another example for the device 124 is a wireless access point 224 for an IEEE 802.11 (Wi-Fi) system. In this case, the radio 128 and the radio 132 may communicate RF signals 226 using Wi-Fi frequency bands. Embodiments are not limited to these examples.

During simultaneous operations for the wireless devices of the wireless system 200 using shared frequency bands, there is a potential for destructive interference 138 that cancels out one or more of the RF signals 212, the RF signals 220, and the RF signals 226. Destructive interference 138 can lead to issues like faded signals, weakened reception, or data corruption. In the event of interference 138, one or more of the wireless devices of the wireless system 200 may implement co-existence techniques to mitigate the effects of destructive interference 138. Specifically, co-existence techniques such as frequency switching may be implemented by one or more of the wireless devices of the wireless system 200. The co-existence techniques help improve the signal quality and maintain reliable communication even in the presence of interference 138.

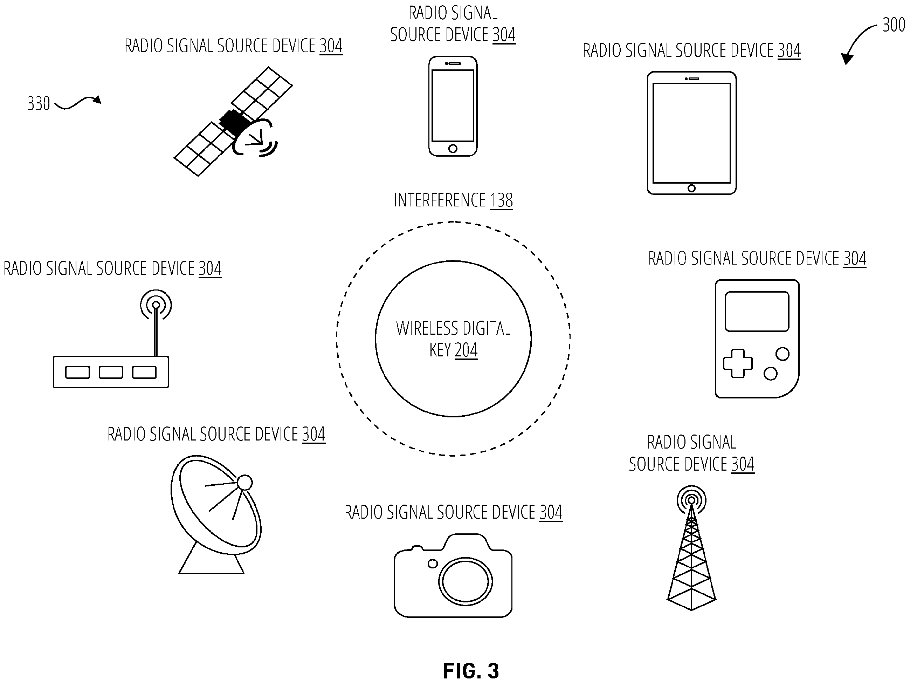

FIG. 3 illustrates a wireless system 300 with other examples for the wireless system 100 and/or the wireless system 200. As discussed with reference to FIG. 1 and FIG. 2, the wireless system 100 and the wireless system 200 may comprise various wireless devices capable of generating RF signals 134, RF signals 136, RF signals 212, RF signals 220, and RF signals 226. Wireless system 300 provides some other examples of wireless devices 330 capable of producing RF signals that may cause interference 138 with the wireless digital key 204, among other types of wireless devices 102.

As depicted in FIG. 3, the wireless system 300 comprises a plurality of wireless devices 330, where each of the wireless devices 330 is capable of generating RF signals according to frequency bands allocated to each of the wireless devices 330. When transmitting radio signals, each of the wireless devices 330 may be referred to as a radio signal source device 304. Examples of a radio signal source device 304 may include without limitation a low earth orbit (LEO) satellite, a terrestrial satellite transceiver, a UE, a tablet computer, a gaming device, a base station, a digital camera, a wireless access point, an IoT device, or any other wireless device capable of transmitting radio signals. Embodiments are not limited to these examples.

In some cases, the allocated frequency bands may vary. However, in other cases, the frequency bands may overlap thereby causing interference 138 for the wireless digital key 204 when communicating the radio signals.

In one embodiment, the radio signal source device 304 may implement co-existence techniques, such as scanning for operations of the wireless digital key 204 and when found switching frequency bands to a non-interfering frequency band or instructing the wireless digital key 204 to switch frequency bands to a non-interfering frequency band.

In one embodiment, the wireless digital key 204 may implement co-existence techniques, such as scanning for operations of the radio signal source device 304 and when found switching frequency bands to a non-interfering frequency band or instructing the radio signal source device 304 to a non-interfering frequency band.

In one embodiment, both the radio signal source device 304 and the wireless digital key 204 may implement co-existence techniques. For example, the radio signal source device 304 and the wireless digital key 204 may implement a preamble and beacon technique to assign or switch frequency bands of either device based on a resource manager or resource controller for the respective communication networks.

In one embodiment, the radio signal source device 304 and the wireless digital key 204 may temporarily suspend operations using a collision avoidance technique to reduce or eliminate the interference 138. In the context of networks, collision avoidance refers to a mechanism employed to prevent or minimize collisions that can occur when multiple devices attempt to transmit data simultaneously on a shared network medium. An example of a collision avoidance technique may include carrier sense multiple access with collision avoidance (CSMA/CA), such as used in Ethernet-based networks, among others.

In one embodiment, the radio signal source device 304 may temporarily suspend operation for some time period to cease causing interference 138. The time period may be variable depending on a given implementation. For example, the time period may be set to a default value sufficient to allow a user 202 to retry sending an RF signals 212 to the ECU 228, such as 1-5 seconds, for example.

In one embodiment, the radio signal source device 304 may temporarily suspend use of a frequency band that is causing interference 138 with the wireless digital key 204. For example, the radio signal source device 304 may continue operations without using the UWB frequency band for some time period or implement puncturing techniques in the UWB frequency band to reduce or eliminate interference 138.

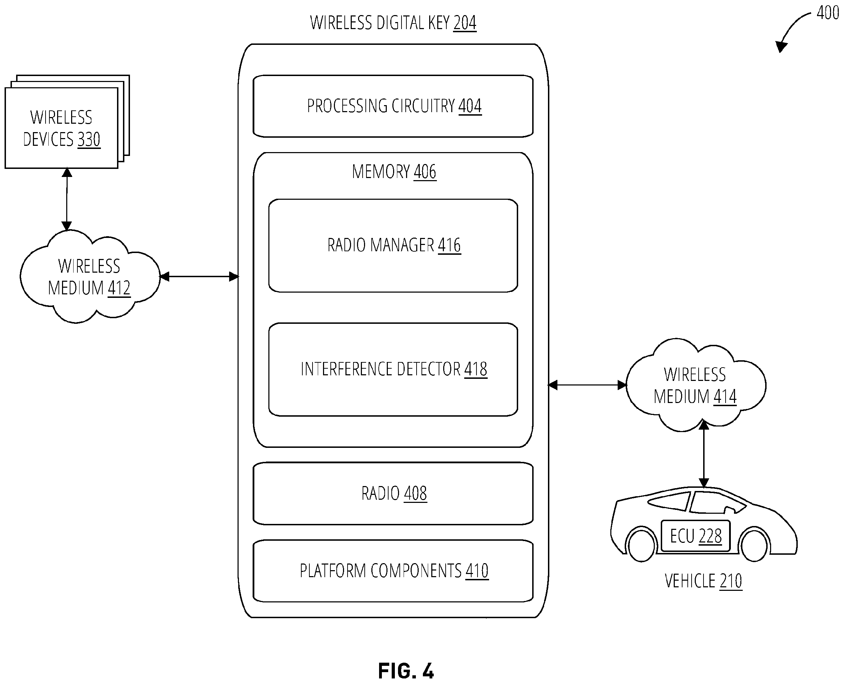

FIG. 4 illustrates an embodiment of a wireless system 400. The wireless system 400 may be suitable for implementing one or more embodiments as described herein. As depicted in FIG. 4, the wireless system 400 may comprise the wireless digital key 204. The wireless digital key 204 may be implemented in a base form or an advanced form. In both cases, the wireless digital key 204 may benefit from co-existence and interference mitigation techniques implemented by the wireless digital key 204, the wireless devices 102, the wireless devices 330, network devices, or some combination thereof.

In one embodiment, the wireless digital key 204 may comprise a base form of a wireless digital key 208, such as a key fob for a vehicle. A key fob, also known as a keyless entry remote or simply a remote key, is a small electronic device that is used to remotely control functions of a vehicle or access a building or facility. It typically serves as a replacement for a traditional metal key. Key fobs are commonly used for functions such as unlocking or locking a vehicle's doors, opening the trunk, and activating or deactivating the vehicle's alarm system. They generally work through wireless communication with the vehicle using various technologies like RF signals, infrared (IR) signals, or even Bluetooth. The key fob usually consists of a small plastic case that houses electronic components and a small battery. Some advanced key fobs also feature additional functions, such as remote engine start, panic buttons, or even the ability to control various vehicle settings remotely. Overall, key fobs offer convenience and enhanced security by allowing users to access and control their vehicles or buildings wirelessly without physically using a traditional key. An example of a wireless digital key 204 implemented as a key fob may comprise the device 104 comprising circuitry 108 and a radio 110.

In one embodiment, the wireless digital key 204 may comprise a more advanced form, such as the UE 206 executing a wireless digital key application 230. In the more advanced form, the wireless digital key 204 may implement more advanced co-existence and interference mitigation techniques relative to the base form, such as a key fob.

The wireless digital key 204 may share a wireless medium 412 comprising frequency spectrum with a set of wireless devices 330. The wireless digital key 204 may also share a wireless medium 414 comprising frequency spectrum with the ECU 228 of the vehicle 210. It may be appreciated that the wireless system 500 may have more or less devices than shown in FIG. 4 with a different network topology for a given implementation. Embodiments are not limited in this context.

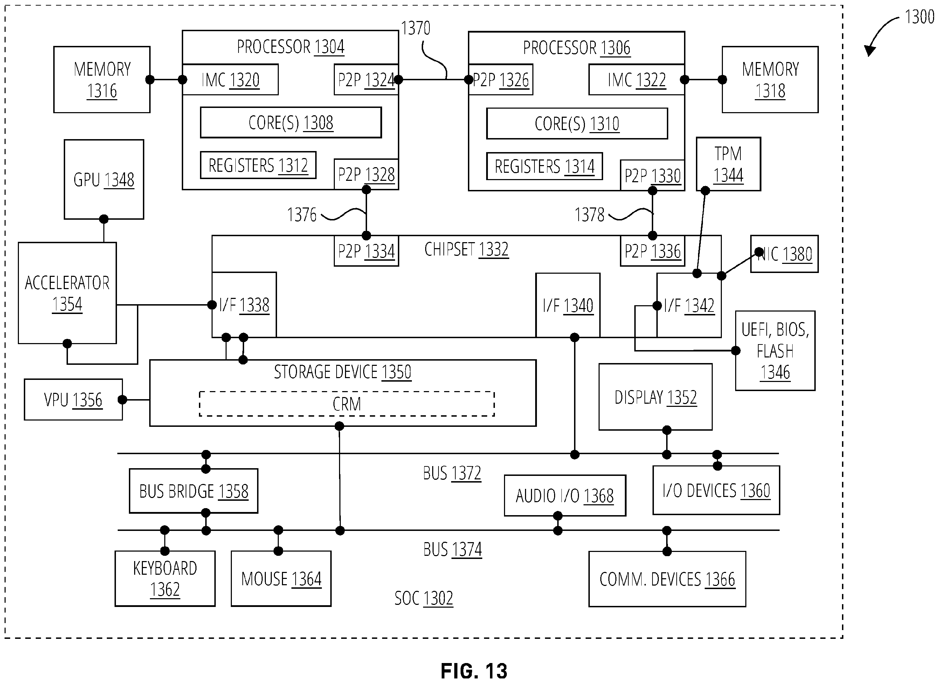

In various embodiments, the wireless digital key 204 may comprise various hardware elements, such as a processing circuitry 404, a memory 406, a radio 408, and a set of platform components 410. Similarly, the wireless devices 330 and/or the vehicle 210 may include similar hardware elements as those depicted for the wireless digital key 204. The wireless digital key 204, wireless devices 330, and computing and communications architecture for vehicle 210, and associated hardware elements, are described in more detail with reference to a computing architecture 1300 as depicted in FIG. 13.

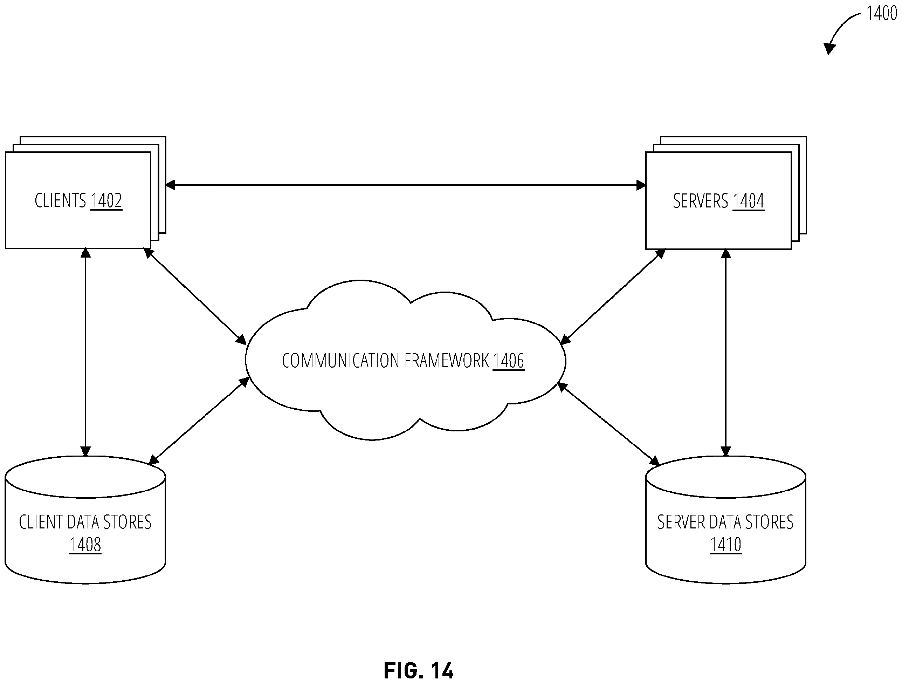

In various embodiments, the wireless digital key 204 may communicate control, data and/or content information via one or both of wireless medium 412 and wireless medium 414. The wireless medium 412 and the wireless medium 414, and associated hardware elements, are described in more detail with reference to a communications architecture 1400 as depicted in FIG. 14.

The memory 406 may store a set of computer executable instructions that when executed by the processing circuitry 404, causes the processing circuitry 404 to implement one or more co-existence techniques as described herein. As depicted in FIG. 4, for example, the memory 406 may comprise a radio manager 416 and an interference detector 418, among other parts.

The radio manager 416 may refer to a device or software module that is responsible for the management and control of radio resources within the wireless digital key 204. It maintains efficient communication between the wireless digital key 204 and a cellular network or Wi-Fi network. When the wireless digital key 204 is a UE 206, the radio manager 416 in the UE 206 facilitates tasks such as radio resource allocation, signal quality measurements, power control, handover management, and overall radio frequency (RF) optimization. By effectively managing the radio resources, the radio manager 416 ensures reliable and seamless connectivity, as well as optimal performance of the UE in various wireless communication scenarios.

The interference detector 418 is a device or software module that is designed to identify and analyze radio frequency (RF) interference in a wireless communication system. The interference detector 418 works by monitoring the wireless medium 412 and wireless medium 414 and identifying abnormal or unwanted signals that can disrupt or degrade the performance of wireless communication devices. It can detect various types of interference sources, such as adjacent channel interference, co-channel interference, pulsed interference, or noise interference. The interference detector 418 typically employs advanced algorithms and signal processing techniques to analyze the received RF signals. It may use techniques like spectral analysis, power level monitoring, or pattern recognition to identify and classify different types of interference patterns. By detecting and identifying RF interference, the interference detector 418 helps in troubleshooting and resolving issues related to poor communication quality, dropped calls, reduced data throughput, or degraded network performance. It plays a vital role in maintaining the integrity and reliability of wireless communication systems by enabling operators to locate and mitigate sources of interference, thereby optimizing the overall performance of the system.

The radio 408 may be implemented using any of the wireless communications technologies or standards as described herein. In one embodiment, for example, the radio 408 is a cellular radio, a Wi-Fi radio, or a wireless digital key radio. A wireless digital key for vehicles typically uses different RF communication technologies to establish a secure connection between the key and the vehicle. The specific type of radios used can vary depending on the implementation and the manufacturer, any may include: (1) UWB radios as previously described; (2) Bluetooth Low Energy (BLE) technology that allows for low-power, short-range communication between the key and the vehicle to provide a secure and reliable connection, and it is widely supported by modern smartphones and vehicles; (3) Near Field Communication (NFC) technology that enables short-range communication between devices by bringing them into close proximity such as those commonly used in contactless payment systems; and (4) Radio Frequency Identification (RFID) technology that uses electromagnetic fields to wirelessly transfer data between a tag and a reader, such as passive RFID tags powered by the reader's energy, which is commonly used for wireless key fobs. For RFID, the reader in the vehicle is designed to recognize and authenticate the RFID tag embedded in the key fob. Embodiments are not limited to these examples.

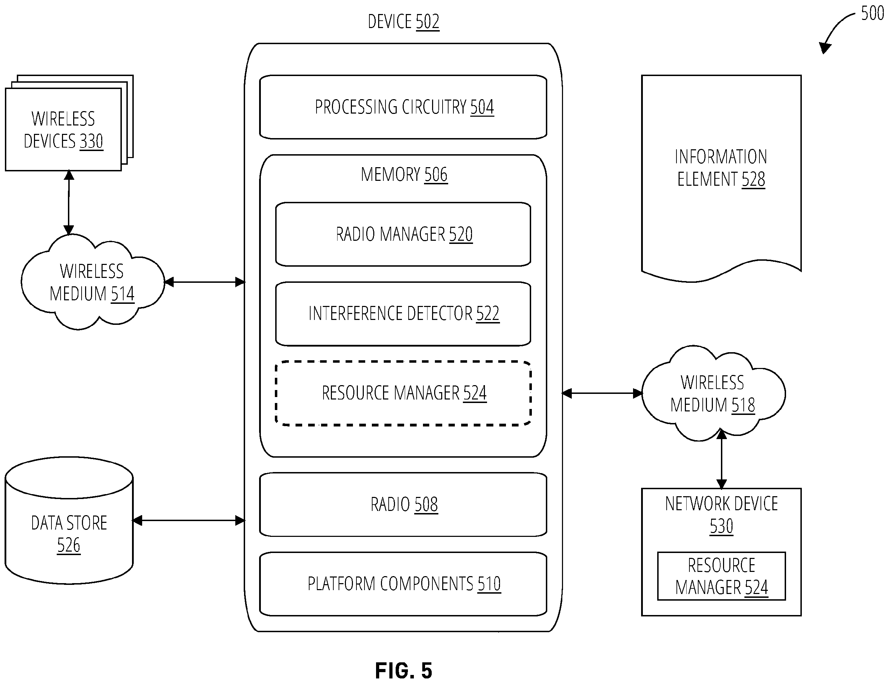

FIG. 5 illustrates an embodiment of a wireless system 500. The wireless system 500 may be suitable for implementing one or more embodiments as described herein. As depicted in FIG. 5, the wireless system 500 may comprise a device 502. The device 502 may comprise any wireless device that supports co-existence between wireless devices 330, such as a radio signal source device 304 or a wireless digital key 204. In one embodiment, for example, the device 502 is a UE, such as UE 206 or UE 216. In the former case, the device 502 is a UE 206 with a wireless digital key application 230. In the latter case, the device 502 is a UE 216 scanning for the UE 206 with the wireless digital key application 230, the wireless digital key 208, or some other wireless device experiencing interference 138 such as an IoT device.

The device 502 is in wireless communication with a set of wireless devices 330 via a wireless medium 514 comprising frequency spectrum. The device 502 may also be communicatively coupled to one or more resource managers 524 via a wireless medium 518 comprising frequency spectrum. It may be appreciated that the wireless system 500 may have more or less devices than shown in FIG. 5 with a different network topology for a given implementation. Embodiments are not limited in this context.

In various embodiments, the device 502 may comprise various hardware elements, such as a processing circuitry 504, a memory 506, a radio 508, and a set of platform components 510. Similarly, the devices 512 and/or the devices 516 may include similar hardware elements as those depicted for the device 502. The device 502, devices 512, and devices 516, and associated hardware elements, are described in more detail with reference to a computing architecture 1300 as depicted in FIG. 13.

In various embodiments, the devices 502, 512 and/or 516 may communicate control, data and/or content information via one or both wireless medium 514, wireless medium 518. The wireless medium 514 and the wireless medium 518, and associated hardware elements, are described in more detail with reference to a communications architecture 1400 as depicted in FIG. 14.

The memory 506 may store a set of computer executable instructions that when executed by the processing circuitry 504, causes the processing circuitry 504 to implement one or more co-existence techniques as described herein. As depicted in FIG. 5, for example, the memory 506 may comprise a radio manager 520, an interference detector 522, and a resource manager 524, among other parts. Additionally, or alternatively, the resource manager 524 may be implemented external to the device 502, such as part of a network device 530 such as a base station 218 (e.g., a gNB or an eNB), a wireless access point 224 (IEEE 902.11x), or a core network (CN) device for either network.

The radio manager 520 may refer to a device or software module that is responsible for the management and control of radio resources within the device 502. It maintains efficient communication between the device 502 and a cellular network or Wi-Fi network. When the device 502 is a UE, the radio manager 520 in the UE facilitates tasks such as radio resource allocation, signal quality measurements, power control, handover management, and overall radio frequency (RF) optimization. By effectively managing the radio resources, the radio manager 520 ensures reliable and seamless connectivity, as well as optimal performance of the UE in various wireless communication scenarios.

The interference detector 522 is a device or software module that is designed to identify and analyze radio frequency (RF) interference in a wireless communication system. The interference detector 522 works by monitoring the wireless medium 514 (e.g., RF spectrum) and identifying abnormal or unwanted signals that can disrupt or degrade the performance of wireless communication devices. It can detect various types of interference sources, such as adjacent channel interference, co-channel interference, pulsed interference, or noise interference. The interference detector 522 typically employs advanced algorithms and signal processing techniques to analyze the received RF signals. It may use techniques like spectral analysis, power level monitoring, or pattern recognition to identify and classify different types of interference patterns. By detecting and identifying RF interference, the interference detector 522 helps in troubleshooting and resolving issues related to poor communication quality, dropped calls, reduced data throughput, or degraded network performance. It plays a vital role in maintaining the integrity and reliability of wireless communication systems by enabling operators to locate and mitigate sources of interference, thereby optimizing the overall performance of the system.

The resource manager 524 may refer to a component or software module that is responsible for effectively managing and allocating frequency resources within a wireless network. Its primary function is to ensure efficient and optimized use of the available frequency spectrum. The resource manager 524 operates by monitoring the usage and availability of communications resources within the network, such as different frequency bands, for example. It considers factors such as signal quality, interference levels, user demands, and regulatory requirements to make intelligent decisions regarding frequency allocation. The resource manager 524 is responsible for tasks such as spectrum planning, dynamic spectrum allocation, interference management, and frequency coordination. It considers parameters like bandwidth, channel capacity, modulation schemes, and transmit power levels to allocate appropriate frequency resources to different devices or user equipment within the network. By effectively managing and allocating the frequency resources, the resource manager 524 aims to minimize interference, maximize spectrum utilization, and optimize the overall performance of the wireless communication system. It helps in mitigating issues related to co-channel interference, congestion, and spectrum scarcity, thereby enabling efficient communication and better user experience.

The radio 508 may be implemented using any of the wireless communications technologies or standards as described herein. In one embodiment, for example, the radio 508 is a cellular radio, a Wi-Fi radio, or a wireless digital key radio. A wireless digital key for vehicles typically uses different RF communication technologies to establish a secure connection between the key and the vehicle. The specific type of radios used can vary depending on the implementation and the manufacturer, any may include: (1) UWB radios as previously described; (2) Bluetooth Low Energy (BLE) technology that allows for low-power, short-range communication between the key and the vehicle to provide a secure and reliable connection, and it is widely supported by modern smartphones and vehicles; (3) Near Field Communication (NFC) technology that enables short-range communication between devices by bringing them into close proximity such as those commonly used in contactless payment systems; and (4) Radio Frequency Identification (RFID) technology that uses electromagnetic fields to wirelessly transfer data between a tag and a reader, such as passive RFID tags powered by the reader's energy, which is commonly used for wireless key fobs. For RFID, the reader in the vehicle is designed to recognize and authenticate the RFID tag embedded in the key fob. Embodiments are not limited to these examples.

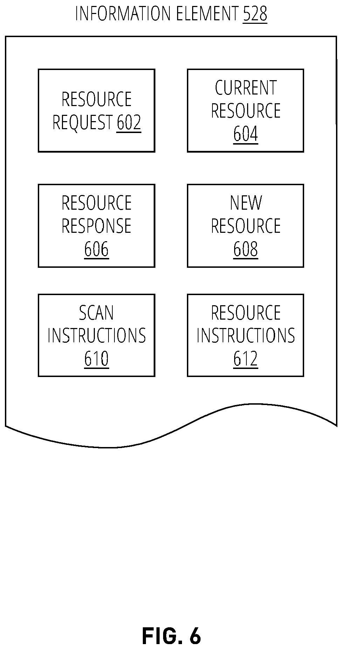

The device 502 may be in communication with the network device 530. For example, this may occur when the resource manager 524 is located external to the device 502. The network device 530 may implement the resource manager 524, and exchange messages with the device 502 for co-existence operations or resource management operations. The messages may implement one or more information elements, such as information element 528, for example. In one embodiment, for example, the information element 528 may comprise a legacy information element 528 as defined by one or more wireless communications standards, such as defined by 3GPP, IMT, IEEE, and so forth. In one embodiment, for example the information element 528 may be a new information element 528 defined for the co-existence techniques as described herein. The information element 528 may comprise one or more defined fields representing various information types. An example of the information element 528 is described with reference to FIG. 6.

FIG. 6 illustrates an example of various information fields for the information element 528. As depicted in FIG. 6, the information element 528 may comprise a resource request 602, a current resource 604, a resource response 532, a new resource 608, scan instructions 610, and resource instructions 612. Embodiments are not limited to these examples.

The resource request 602 may carry information such as text or values representing a request for a communication resource. For example, the device 502 may send the resource request 602 to the network device 530 for allocation of a communication resource to mitigate interference 138 between the target device 302 and a radio signal source device 304. In a wireless system, such as a cellular system or a Wi-Fi system, a communication resource refers to the physical or logical entities that are allocated and utilized to enable communication between UE and the network. Communication resources include various components and channels that facilitate the transmission of voice, data, or multimedia information. Some common examples of communication resources in a cellular system are: (1) a carrier frequency which is a specific frequency band within the RF spectrum that is used to carry wireless signals; (2) timeslots and frames for systems using time division multiple access (TDMA) or code division multiple access (CDMA), which provide time-based divisions of the carrier frequency allowing multiple users to share the same frequency band; (3) physical channels to carry information including control channels for signaling and synchronization as well as traffic channels for user data transmission, such as Broadcast Control Channel (BCCH), Common Control Channel (CCCH), and Dedicated Control Channel (DCCH), and the like; (4) logical channels which are logical entities mapped onto physical channels to carry specific types of data or signaling information, such as Traffic Channels (TCH) for voice or data transmission, Paging Channel (PCH) for incoming call notifications, and Random Access Channels (RACH) for initial access requests, and so forth; (5) bandwidth which refers to the amount of frequency spectrum assigned to a particular communication link or channel based on factors like the type of service, network congestion, or user requirements. In various embodiments, the resource request 602 is for a frequency band of the RF spectrum. However, embodiments are not limited to frequency bands as communication resources.

The current resource 604 may carry information such as text or values representing a current communication resource used by one or more of the wireless devices 330. In one embodiment, for example, the current resource 604 may comprise a value representing a frequency used by the UE 206 operating a wireless digital key application 230 or a wireless digital key 208. The current resource 604 may be separate or combined with the resource request 602.

The resource response 532 may carry information such as text or values representing a response to the resource request 602. For example, when the resource request 602 is sent from the device 502 to the network device 530, the resource manager 524 of the network device 530 may allocate a new resource 608 for one or more of the wireless devices 330. The resource response 532 may include a new resource 608 allocated to one or more of the wireless devices 330, such as the UE 206 with wireless digital key application 230, the wireless digital key 208, the radio signal source device 304, and so forth.

The scan instructions 610 may carry information such as text or values representing a control directive for the device 502 to begin scanning operations to detect interference 138 between RF signals, such as RF signals 134, RF signals 136, RF signals 212, RF signals 214, RF signals 220, and RF signals 226. In some embodiments, the scan instructions 610 may include a defined geographical area, such as a cell in a cellular network, for example.

The resource instructions 612 may carry information such as text or values representing a control directive for the device 502 to perform some action. In one embodiment, the resource instructions 612 may instruct the device 502 to switch from the current resource 604 to the new resource 608. In one embodiment, the resource instructions 612 may instruct the device 502 to send messages to one or more of the wireless devices 330 to switch from the current resource 604 to the new resource 608.

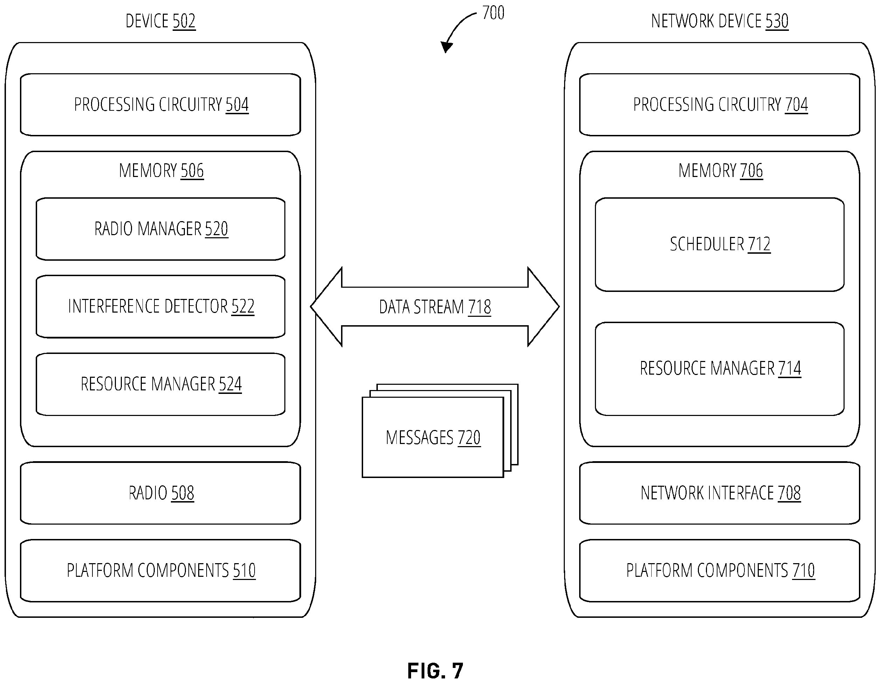

FIG. 7 illustrates a wireless system 700 comprising the device 502 and the network device 530. The wireless system 700 depicts a more detailed example of the network device 530. As depicted in FIG. 7, the network device 530 may comprise processing circuitry 704, memory 706, a network interface 708, and one or more platform components 710. The network interface 708 may comprise a wired or wireless network interface depending on whether the network device 530 is co-located with a base station 218 or wireless access point 224, or as part of a core network.

The network device 530 may also include a scheduler 712 for a cellular system, Wi-Fi system, or some other wireless system. In a cellular system, for example, the scheduler 712 is responsible for managing and allocating the available communication resources to different UE. It attempts to optimize system capacity, throughput, fairness, and quality of service. For example, the scheduler 712 determines how the available communication resources, such as timeslots, frequency channels, and transmit power, are allocated to UEs based on their specific applications and network conditions. It considers factors like data rate requirements, channel conditions, traffic patterns, and quality of service priorities. The scheduler 712 may assign priorities to different users or UEs based on specific criteria. For example, it may prioritize real-time traffic, such as voice or video calls, over data traffic to ensure low latency and a smooth user experience. The scheduler 712 may implement scheduling policies and algorithms to determine which UE gets access to the communication resources and when. It optimizes the usage of resources, considering factors such as fairness, capacity, channel conditions, traffic load, and Quality of Service (QoS) requirements. The schedulers 712 aims to balance the traffic load across different cells or sectors within the cellular system. By dynamically adjusting resource allocation, it helps reduce congestion in heavily loaded areas and maximize the overall system capacity. The scheduler 712 considers interference from neighboring cells or UEs when allocating resources. It aims to minimize interference by carefully coordinating resource allocation and transmission timings to improve the overall system performance.

The network device 530 may include a resource manager 714. The resource manager 714 is similar to the resource manager 524. However, the resource manager 714 takes into consideration the allocation of resources for a network or a portion of a network, such as a cell in a cellular system. While the scheduler 712 performs primary scheduling operations for a network, the resource manager 524 may perform secondary scheduling operations for a network, such as in response to temporary allocation or re-allocation of communication resources for co-existence or interference mitigation for the wireless devices 330.

The device 502 and the network device 530 may exchange information in the form of messages 720 over a data stream 718. The data stream 718 may traverse additional network devices, such as switches and routers, as it carries messages 720 between the device 502 and the network device 530.

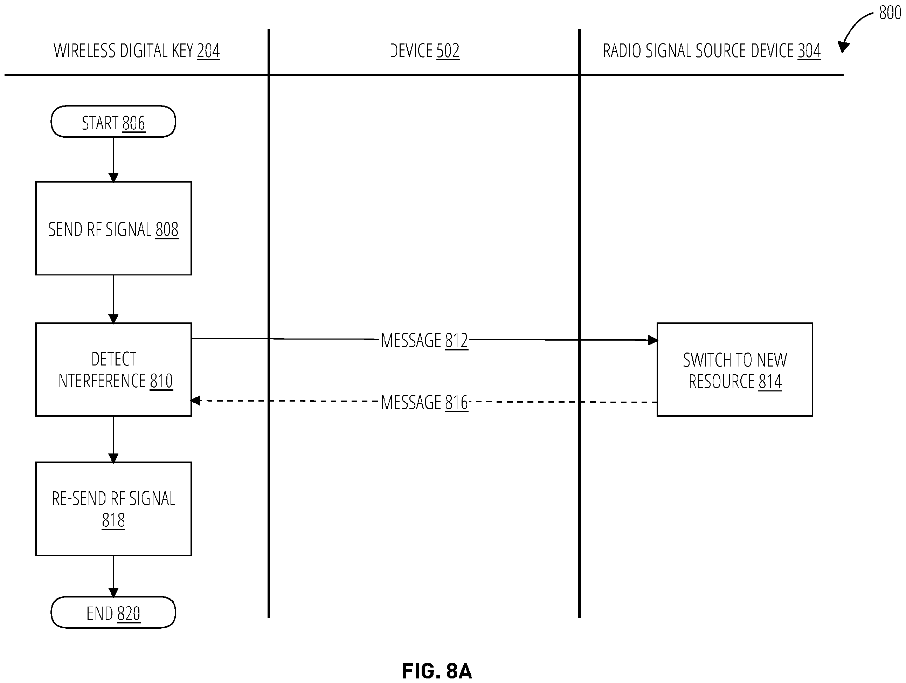

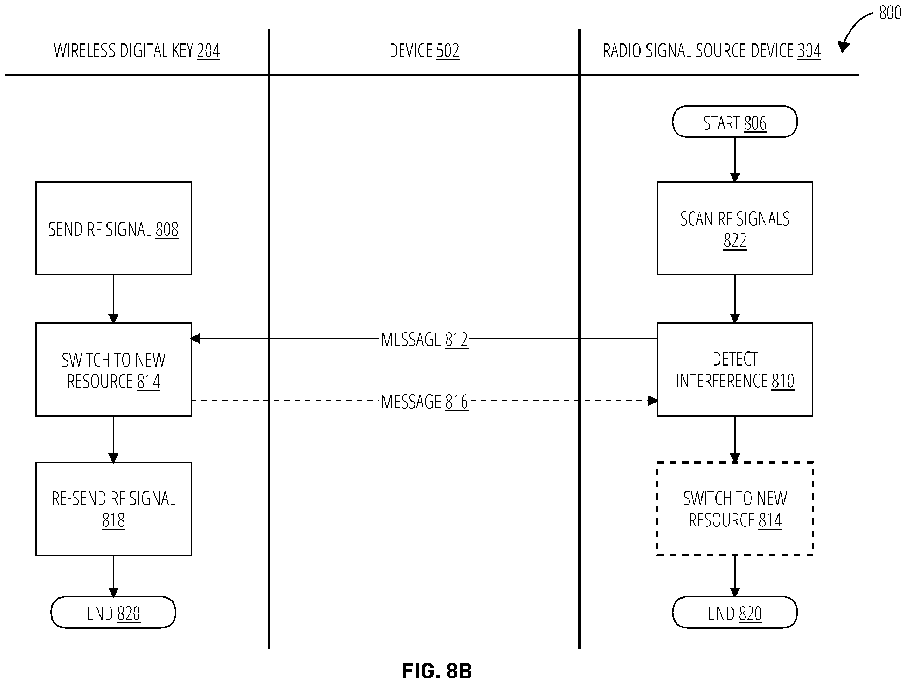

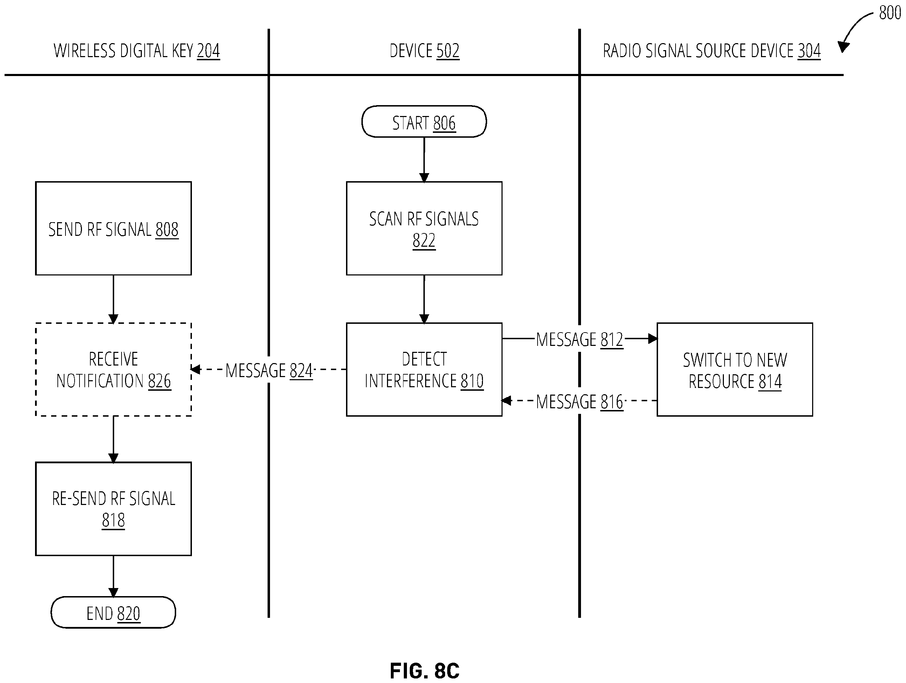

FIG. 8A, FIG. 8B, and FIG. 8C illustrates different examples for a message flow 800 suitable for implementing embodiments as described herein. The message flow 800 illustrates operations and exchange of messages between a wireless digital key 204, a device 502, and a radio signal source device 304. In this example, the wireless digital key 204 and the radio signal source device 304 cooperatively operate to implement co-existence and interference mitigation techniques without use of any intermediate devices, such as device 502.

As depicted in FIG. 8A, assume the wireless digital key 204 is a UE 206 with a wireless digital key application 230 or the wireless digital key 208 such as a key fob. At start 806, a user 202 may move within a communication range of a vehicle 210 and operate the wireless digital key 204. At block 808, the wireless digital key 204 may send an RF signal, such as RF signals 212, to the ECU 228 of the vehicle 210. At block 810, the wireless digital key 204 may detect interference 138 using the interference detector 418. In response to detection of the interference 138, the resource manager 420 of the wireless digital key 204 may encode a message 812 with the information element 528 including a current resource 604 and/or resource instructions 612, and send the encoded message 812 to the radio signal source device 304 as a unicast or broadcast transmission. At block 814, the radio signal source device 304 may receive the encoded message 812. The radio manager 520 of the radio signal source device 304 may decode the encoded message 812, read the resource instructions 612, and switch to a new resource 608. The new resource 608 may be allocated by the resource manager 524 of the radio signal source device 304, the device 502, or the network device 530. The radio signal source device 304 may optionally encode a message 816 with an information element 528 including a resource response 532 and the new resource 608, and send the encoded message 816 to the wireless digital key 204. The wireless digital key 204 may receive the encoded message 816. The resource manager 524 of the wireless digital key 204 may decode the encoded message 816. At block 818, the wireless digital key 204 may re-send the RF signals 212 to the ECU 228 of the vehicle 210 without interference 138 from the radio signal source device 304. The message flow 800 ends at end 820.

FIG. 8B illustrates a different example for the message flow 800 suitable for implementing embodiments as described herein. The message flow 800 illustrates operations and exchange of messages between a wireless digital key 204, a device 502, and a radio signal source device 304. In this example, the wireless digital key 204 and the radio signal source device 304 cooperatively operate to implement co-existence and interference mitigation techniques without use of any intermediate devices, such as device 502.

As depicted in FIG. 8B, assume the wireless digital key 204 is a UE 206 with a wireless digital key application 230 or the wireless digital key 208 such as a key fob. At start 806, at block 822, the radio signal source device 304 begins scanning for RF signals 212 of the wireless digital key 204. Sometime thereafter, a user 202 may move within a communication range of a vehicle 210 and operate the wireless digital key 204. At block 808, the wireless digital key 204 may send an RF signal, such as RF signals 212, to the ECU 228 of the vehicle 210. At block 810, the radio signal source device 304 may detect interference 138 using the interference detector 522. In response to detection of the interference 138, the resource manager 524 of the radio signal source device 304 may encode a message 812 with the information element 528 including a current resource 604 and/or resource instructions 612, and send the encoded message 812 to the wireless digital key 204 as a unicast or broadcast transmission. At block 814, the wireless digital key 204 may receive the encoded message 812. The radio manager 416 of the wireless digital key 204 may decode the encoded message 812, read the resource instructions 612, and switch to a new resource 608. The new resource 608 may be allocated by the resource manager 524 of the radio signal source device 304, the device 502, or the network device 530. The wireless digital key 204 may optionally encode a message 816 with an information element 528 including a resource response 532, and send the encoded message 816 to the radio signal source device 304. At block 818, the wireless digital key 204 may re-send the RF signals 212 to the ECU 228 of the vehicle 210 without interference 138 from the radio signal source device 304. The message flow 800 ends at end 820.

Additionally, or alternatively, the wireless digital key 204 may optionally encode a message 816 with an information element 528 including a resource response 532 indicating that the wireless digital key 204 cannot switch to the new resource 608. For example, the wireless digital key 204 may comprise a simple key fob and it may not have the capability of switching frequencies. The wireless digital key 204 sends the encoded message 816 to the radio signal source device 304. The radio signal source device 304 may receive the encoded message 816. The resource manager 524 of the radio signal source device 304 may decode the encoded message 816 with an indication that the wireless digital key 204 cannot switch to the new resource 608. In this case, the resource manager 524 of the radio signal source device 304 sends a control directive to the radio 508 to switch from a current resource 604 to a new resource 608. The message flow 800 ends at end 820.

FIG. 8C illustrates a different example for the message flow 800 suitable for implementing embodiments as described herein. The message flow 800 illustrates operations and exchange of messages between a wireless digital key 204, a device 502, and a radio signal source device 304. In this example, the wireless digital key 204 and the radio signal source device 304 cooperatively operate to implement co-existence and interference mitigation techniques with use of an intermediate device, such as device 502.

As depicted in FIG. 8C, assume the wireless digital key 204 is a UE 206 with a wireless digital key application 230 or the wireless digital key 208 such as a key fob. Further assume the device 502 is a UE 216 or a computer 222.

At start 806, at block 822, the device 502 begins scanning for RF signals 212 of the wireless digital key 204. Sometime thereafter, a user 202 may move within a communication range of a vehicle 210 and operate the wireless digital key 204. At block 808, the wireless digital key 204 may send an RF signal, such as RF signals 212, to the ECU 228 of the vehicle 210. At block 810, the radio signal source device 304 may detect interference 138 using the interference detector 522. In response to detection of the interference 138, the resource manager 524 of the device 502 may encode a message 812 with the information element 528 including a current resource 604 and/or resource instructions 612, and send the encoded message 812 to the radio signal source device 304 as a unicast or broadcast transmission. At block 814, the radio signal source device 304 may receive the encoded message 812. At block 814, the radio manager 416 of the radio signal source device 304 may decode the encoded message 812, read the resource instructions 612, and switch to a new resource 608. The new resource 608 may be allocated by the resource manager 524 of the radio signal source device 304, the device 502, or the network device 530. The radio signal source device 304 may optionally encode a message 816 with an information element 528 including a resource response 532, and send the encoded message 816 to the device 502. The device 502 may optionally encode a message 824 with the information element 528 indicating the radio signal source device 304 has switched from the current resource 604 to the new resource 608, and send the encoded message 824 to the wireless digital key 204. At block 826, the wireless digital key 204 may receive the encoded message 824, decode the encoded message 824, and confirm the wireless medium 412 is clear for communications. With or without the confirmation message 824, at block 818, the wireless digital key 204 can re-send the RF signals 212 to the ECU 228 of the vehicle 210 without interference 138 from the radio signal source device 304. The message flow 800 ends at end 820.

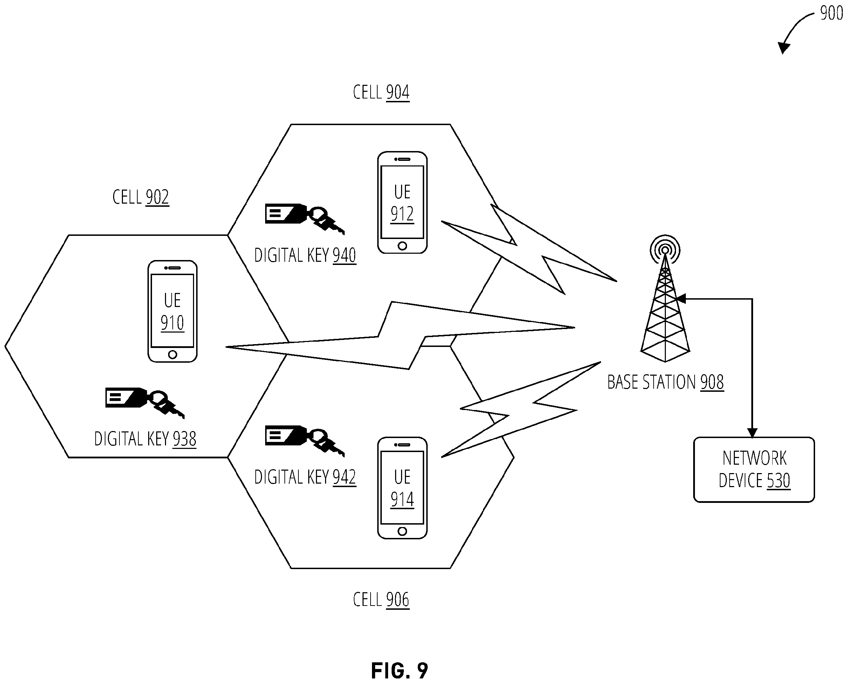

FIG. 9 illustrates a wireless system 900 suitable for implementing the embodiments described herein. Specifically, the wireless system 900 illustrates an example of the message flow 800 as described with reference to FIG. 8C.

As described with reference to FIG. 8C, the wireless digital key 204, the device 502, and the radio signal source device 304 cooperate to implement co-existence and interference mitigation techniques. In this example, the device 502 operates as an intermediate device between the wireless digital key 204 and the radio signal source device 304. This particular scenario may allow a network to utilize a variety of wireless devices with sufficient capabilities to assist the wireless digital key 204, which may be particularly desirable when the wireless digital key 204 is a simple key fob or other type of wireless digital key 204 with limited capabilities.

FIG. 9 provides an example of a 3GPP cellular system implementing the message flow 800. The following sections are structured as follows considering 3GPP cellular system as an example of: (1) 3GPP cellular systems scanning for UWB car keys in each of the relevant channels; (2) 3GPP cellular systems perform an aggregated energy detect across multiple 6GHz wireless car key channels; and (3) inclusion of 3GPP cellular system beacons / preambles scheme in 6 GHz wireless car key channels to facilitate detection.

The wireless system 900 depicts a 3GPP cellular systems scanning for UWB car keys in each of the relevant channels. The waveform utilized for digital car keys communication is based on the IEEE 802.15.4z standard, which is an amendment of the IEEE 802.15.4 Standard, which is the technical standard defining the physical (PHY) layer and media access control (MAC) layer operation of a low-rate wireless personal area network (LR-WPAN). Since this not a waveform currently considered in the IMT framework, these systems are not expected to implement it. Thus a simple energy detection approach is proposed to be implemented. For example, the IMT/3GPP cellular systems assess the level of energy present in relevant parts of the 6GHz band, in particular: (1) 6240 - 6739 MHz (ultra-wideband (UWB) channel 5), which is part of the standardized protocol for "Digital Keys" (primarily used); (2) 6739.2 - 7238.4 MHz (ultra-wideband (UWB) channel 6) which is used by some of the classical key fobs; (3) 7238.4 - 7737.6 MHz (ultra-wideband (UWB) channel 8) which is used by some of the classical key fobs; (4) 7737.6-8236.8 MHz (ultra-wideband (UWB) channel 9), which is a mandatory channel for UWB systems; (5) 8236,8-8736 MHz (ultra-wideband (UWB) channel 10), which is being considered for use by the UWB community and is expected to replace channel 5 in the future due to the heavy WiFi interference; (6) 8736-9235.2 MHz (ultra-wideband (UWB) channel 12), which is also being considered for use by the UWB community.

Alternatively, or additionally, a 3GPP infrastructure or client device, such as a UE (e.g., a cell-phone or other) manufacturer may reach out to relevant vehicular manufacturers in order to get access to (non-public) information on the exact channel and signal parameters being used for specific digital car keys. Knowledge on the parameters of the waveform can be exploited for a refined detection mechanisms, where 3GPP infrastructure or client devices detect the presence of wireless car keys.

Different approaches may be used for implementing the scanning process. For example, in a first solution, 3GPP client devices scan for presence of wireless car keys. It may be efficient for client devices (e.g., UEs) to conduct the scanning for wireless car keys, because it is likely that some client devices such as mobile phones or vehicles themselves may happen to be in close proximity to wireless car keys and thus an efficient detection can be implemented because of the optimized link budget. This may be more challenging for the remote network infrastructure which is to consider related propagation losses. It is worth noting that a IMT 3GPP UE may have UWB as an in-device system, allowing for coordination on the higher-layer of the system for in-device co-existence. Such a UE which implements UWB itself, may also signal to the infrastructure about the existence of signals in specific channels in a defined area.

The first solution may be implemented by: (1) 3GPP infrastructure coordinates scanning process of client devices; or (2) 3GPP client devices themselves autonomously coordinate scanning process.

The first solution may be implemented by the 3GPP infrastructure coordinating scanning process of client devices. In this case, the infrastructure is instructing selecting client devices (such as cell phones or vehicles) to execute the scanning for wireless car keys. Typically, some available client devices are instructed to do so, because: (1) the overall power consumption would be high; (2) there would be a high communication overhead, first to instruct the target client devices individually and then to report the finding of the scanning process back to the network, which would likely constitute an inefficient usage of network resources; and (3) it is sufficient to have a single client device executing the scanning in a given geographic area - additionally scanning of further near-by client devices would not provide much further information.

Rather, the network is proposed to instruct a sub-set of client devices to execute the process of scanning for wireless car keys. The sub-set is proposed to include such client devices which are located in distinct geographic areas. For example, a "geographic area" may have a reasonable size such that the presence of wireless car keys can be efficiently detected, possibly < 100 meters (m) of diameter. Also, in case that there are multiple client-devices located in such a "geographic area", it is proposed that there is a cyclic change of the specific client devices which is used to execute the scanning process in order to distribute the "burden" (in terms of power consumption, communication overhead, etc.) as evenly as possibly across client devices located in a given "geographic area".

Also, the network may choose to either: (1) allocate the scanning of the 6 concerned channels to a single client device; or (2) distribute the scanning among multiple client devices, for example each target client device scanning a different channel (e.g., one (a first) client device scanning 6.240 - 6.739 GHz (ultra-wideband (UWB) channel 5), another (a second) client device scanning 6739.2 -7238.4 MHz (ultra-wideband (UWB) channel 6), another (a third) client device scanning 7238.4 -7737.6 MHz (ultra-wideband (UWB) channel 8) ), another 7737.6 - 8236.8 MHz (ultra-wideband (UWB) channel 9), another 8236.8 - 8736.5 MHz (ultra-wideband (UWB) channel 10), another 8736 - 9235.2 MHz (ultra-wideband (UWB) channel 12) and so on).

When the presence of wireless car key(s) is detected in a given geographic area, then a "dynamic geographic protection area" is being defined within which no 3GPP communication is to be scheduled in any (parts of the) concerned UWB channel during a pre-determined "car key protection time interval" in which wireless car keys are detected. A proposal for the size of the "dynamic geographic protection area" is a diameter of 200m, however it can be smaller or larger. A proposal for the length of the "car key protection time interval" is 1 minute, however it can be shorter or longer. This solution may be implemented in various phases.

In phase 1, a 3GPP base station is splitting its coverage area in "geographic areas" for scanning of vehicular car keys. For each of such geographic areas, the 3GPP base station is selecting a sub-set (or all) of available client devices to scan for the presence of wireless car key communication. One specific client device may be instructed to scan one, two or six of the concerned channels during a pre-determined scanning time interval for the presence of wireless car keys.

In phase 2, the 3GPP base station is instructing each client device identified for a scanning task using a message field as defined in TABLE 1.

**TABLE 1**

| | | |
|---|---|---|
| Target client device ID, Scanning task ID (an ID which is allocated to the scanning request, this ID is used to report the scanning results and thus the 3GPP base station can relate the result to a given scanning task) | Instructions on scanning to be performed in one, two or more of the concerned channels: 6.240 - 6.739 GHz (ultrawideband (UWB) channel 5), 6739.2 - 7238.4 MHz (ultra-wideband (UWB) channel 6), 7238.4 - 7737.6 MHz (ultra-wideband (UWB) channel 8), 7737.6- 8236.8 MHz (ultrawideband (UWB) channel 9), 8236,8-87365 MHz (ultra-wideband (UWB) channel 10), 8736-9235.2 MHz (ultra-wideband (UWB) channel 12) | Instructions on the duration of the scanning time period, for example 1 Minute scanning duration. |

In phase 3, the concerned client devices receive the scanning request and execute the request. The scanning may be performed through: (1) energy detection, e.g., the sum of |.|^2 of samples taken from the target UWB channel are evaluated; in case that the result is above a defined threshold (over the scanning period or alternatively the presence of a temporal peak is deemed sufficient), the presence of a wireless car key is confirmed; otherwise, it is assumed that no wireless car key is present; (2) cross-correlation with a known signature signal of the wireless car key communication (which may be requested from a vehicular manufacturer or manufacturer of a wireless car key); (3)decoding of the wireless car key signal (whose exact format may be requested from a vehicular manufacturer or manufacturer of a wireless car key); or (4) any other scanning strategy.

In phase 4, the concerned client devices report the scanning results back to the 3GPP base station, typically using a message field as defined in TABLE 2.

**TABLE 2**

| | | |
|---|---|---|
| Target client device ID, Scanning task ID (originally provided by the 3GPP base station) | Information on scanning performed in one, two or more of the concerned channels: 6.240 - 6.739 GHz (ultrawideband (UWB) channel 5), 6739.2 - 7238.4 MHz (ultra-wideband (UWB) channel 6), 7238.4 - 7737.6 MHz (ultra-wideband (UWB) channel 8) ), 7737.6-8236.8 MHz (ultrawideband (UWB) channel 9), 8236,8-87365 MHz (ultra-wideband (UWB) channel 10), 8736-9235.2 MHz (ultra-wideband (UWB) channel 12) | Scanning result: i) Wireless car key detected in which UWB channel or ii) Wireless car key not detected or iii) unclear result. Optionally, additional information can be provided, e.g. detected signal strength (leading to trustworthiness assessment of detection), detection method, etc. |

In phase 5, in case that the presence of wireless car keys is reported within a given "geographic areas" for scanning of vehicular car keys, then the 3GPP base station will instruct the client devices within a "dynamic geographic protection area" not to use any part of the UWB cannels in which the activity of a wireless car key was detected. The "dynamic geographic protection area" may correspond to the "geographic areas" for scanning of vehicular car key or may be larger, for example 1.5x its diameter to be sure that no harmful interference is caused on wireless car keys. For example, a message field as defined in TABLE 3.

**TABLE 3**

| | | |
|---|---|---|
| Target client device ID(s), this message field can be sent individually to each client device in a "dynamic geographic protection area" or to a group of client devices or it can be broadcasted to the client devices covered by one or more of the antennas of a 3GPP base station. | Information temporary exclusion of usage of one of the following channels: 6.240 - 6.739 GHz (ultrawideband (UWB) channel 5), 6739.2 - 7238.4 MHz (ultra-wideband (UWB) channel 6), 7238.4 - 7737.6 MHz (ultra-wideband (UWB) channel 8), ),7737.6-8236.8 MHz (ultrawideband (UWB) channel 9), 8236,8-87365 MHz (ultra-wideband (UWB) channel 10), 8736-9235.2 MHz (ultra-wideband (UWB) channel 12) | Information of duration of the temporary exclusion period (during which specific UWB channels may not be used by the 3GPP system in the concerned area). For example, a typical duration is 1 minute. |

It is worthy to note that it may not be possible to communicate the exclusion decision to target client devices. Rather, it could be sufficient that a 3GPP base station is not allocating resources in the excluded UWB bands. However, in some cases, such an approach is not sufficient. For example, a client device may be requested attachment to a different provider.

In phase 6, 3GPP base stations and client devices (which are located in the "dynamic geographic protection area" during the exclusion time period) do not communicate with each other in the excluded UWB channels occupied by wireless car keys.

The wireless system 900 depicts an example of a cellular system suitable for implementing phases 1-6 as previously discussed. Specifically, the wireless system 900 may coordinate scanning for wireless car keys.

As depicted in FIG. 9, the wireless system 900 comprises multiple cells, such as cell 902, cell 904, and cell 906. Three cells are an example and the wireless system 900 may comprise many more cells in actual implementation. Assume the cell 902 has a UE 910 and a digital key 938, cell 904 has a UE 912 and a digital key 940, and the cell 906 has a UE 914 and a digital key 942. The UE 910, UE 912, and the UE 914 are capable of communicating with a base station 908. The base station 908 implements or has access to the network device 530 with the resource manager 524. In this example, the base station 908 and the UE 910, UE 912, and UE 914 are 3GPP 5G or 6G devices.

In accordance with phases 1-6, the base station 908 defines distinct geographic areas for scanning and identifies target wireless devices scanning for wireless digital keys. The base station 908 instructs each of the UE 910, UE 912, and UE 914 to perform the scanning task. The UE 910, UE 912, and UE 914 each receive the scanning request and executes the request. The UE 910, UE 912, and UE 914 report scanning results back to the base station 908. When a presence or activity of the digital key 938, digital key 940, or digital key 942 is reported within a given geographic area of cell 902, cell 904, or cell 906, respectively, for scanning of vehicular car keys, then the base station 908 instructs the client devices within a dynamic geographic protection area to not use any of the UWB channels in which actively of a digital key was detected. The dynamic geographic protection area may include one or more of the cell 902, cell 904, and cell 906. The base station 908 and client devices which are located in the dynamic geographic protection area during an exclusion time period do not communicate with each other in the excluded UWB channels occupied by the wireless digital keys.

It is worthy to note that the reference to 3GPP/IMT systems is an example. Embodiments may apply to any other communication system operating in the 6 GHz band (or other band being shared with UWB systems), including 3GPP Rel. 1, Rel. 2, ..., Rel. 14, Rel. 15, Rel. 16, Rel. 17, Rel. 18, Rel. 19, Rel. 20, Rel. 21, Rel. 22 and/or any follow-up Release of 3GPP. Other possible communications systems include WiFi (IEEE 802.11 based) and others. Wireless car keys are an example of UWB systems operating in the same band and thus potentially undergoing interference. Embodiments apply to any other type of such UWB systems (and also systems other than UWB systems) operating in an interfering band/channel such as a 6 GHz band/channel or any other suitable band/channel, including 7 GHz, 8 GHz, 9 GHz, etc.

Additionally, or alternatively, embodiments may implement a second solution where 3GPP client devices themselves autonomously coordinate scanning process. In this case, there is no coordinating of the scanning process provided by the 3GPP Infrastructure. Rather, the scanning process is automatically triggered within the various client devices. Typically, the scanning process is either triggered randomly (for example a randomly set counter running out) or cyclically, e.g., the scanning is repeated periodically after a predetermined time interval.

A given client device may implement the following phases for the second solution. In phase 1, each individual client device is determining whether the scanning process for wireless car keys may be initiated (the scanning process is either triggered randomly (for example a randomly set counter running out) or cyclically, e.g., the scanning is repeated periodically after a pre-determined time interval or any other trigger may be defined).

In phase 2, when an individual client device has determined that the scanning process for wireless car keys is to be initiated, then it determines whether it may be scanning one, two or more of the concerned channels This determination may be random or may be pre-determined, for example some client devices are pre-configured to scan one specific UWB channel, other client devices to scan another specific UWB channel, etc.

In phase 3, in case that a client device has determined the presence of a wireless car key, it informs the 3GPP infrastructure about its finding using a messaging field as defined in TABLE 4.

**TABLE 4**

| | | |
|---|---|---|
| Target client device ID, Scanning task ID (determined by the client device, to have a specific reference for further exchanges) | Information on scanning performed in one, two or more of the concerned channels: 6.240 - 6.739 GHz (ultrawideband (UWB) channel 5), 6739.2 - 7238.4 MHz (ultra-wideband (UWB) channel 6), 7238.4 - 7737.6 MHz (ultra-wideband (UWB) channel 8) ), 7737.6-8236.8 MHz (ultrawideband (UWB) channel 9), 8236,8-87365 MHz (ultra-wideband (UWB) channel 10), 8736-9235.2 MHz (ultra-wideband (UWB) channel 12) | Scanning result: i) Wireless car key detected in which UWB channel or ii) Wireless car key not detected or iii) unclear result. Optionally, additional information can be provided, e.g. detected signal strength (leading to trustworthiness assessment of detection), detection method, etc. |

3GPP base stations and client devices (which are located in the "dynamic geographic protection area" during the exclusion time period) do not communicate with each other in the excluded UWB channels occupied by wireless car keys.

Additionally, or alternatively, embodiments may implement a third solution where 3GPP infrastructure scans for presence of wireless keys. This is the case where small, micro or nano cells are included in a heterogeneous cellular network. Those cells have a radius of a few to tens of meters, allowing the base station to also detect the energy in the UWB channels.

For example, 3GPP cellular systems may perform an aggregated energy detect across multiple 6GHz wireless car key channels. In this case, a combination of the first solution and the second solution allows for a more reliable scanning of the 6 GHz band, since base stations and UEs will cooperate on determining the interference map that will be a basis for the dynamic geographic protection map.

In another example, inclusion of IMT/3GPP Cellular system Beacons / Preambles in 6 GHz wireless car key channels to facilitate detection may be implemented. In this case, advanced UWB systems would include a beacon or a preamble which utilizes a waveform that can be received by the IMT/3GPP cellular system. This could be a paging or a synchronization signal typically specified for those systems.

Operations for the disclosed embodiments may be further described with reference to the following figures. Some of the figures may include a logic flow. Although such figures presented herein may include a particular logic flow, it can be appreciated that the logic flow merely provides an example of how the general functionality as described herein can be implemented. Further, a given logic flow does not have to be executed in the order presented unless otherwise indicated. Moreover, not acts illustrated in a logic flow may be used in some embodiments. In addition, the given logic flow may be implemented by a hardware element, a software element executed by a processor, or any combination thereof. The embodiments are not limited in this context.

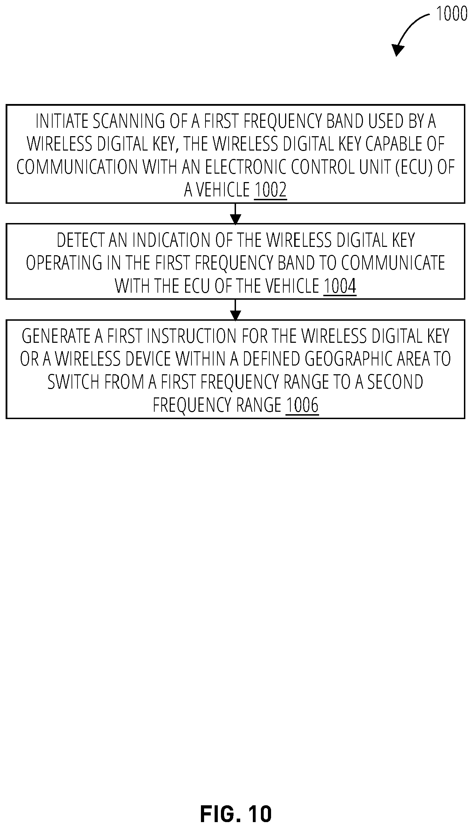

FIG. 10 illustrates an embodiment of a logic flow 1000. The logic flow 1000 may be representative of some of the operations executed by one or more embodiments described herein. For example, the logic flow 1000 may include some of the operations performed by devices or entities within the wireless system 100, wireless system 200, wireless system 300, wireless system 400, wireless system 500, wireless system 700, or wireless system 900. More particularly, the logic flow 1000 illustrates an example where a wireless digital key 204, a device 502, or a radio signal source device 304, together or separately, implement co-existence and interference mitigation techniques as described herein.

In block 1002, logic flow 1000 initiate scanning of a first frequency band used by a wireless digital key, the wireless digital key capable of communication with an electronic control unit (ECU) of a vehicle. In block 1004, logic flow 1000 detects an indication of the wireless digital key operating in the first frequency band to communicate with the ECU of the vehicle. In block 1006, logic flow 1000 generates a first instruction for the wireless digital key or a wireless device within a defined geographic area to switch from a first frequency range to a second frequency range.

By way of example, an electronic device initiates scanning of a first frequency band used by a wireless digital key 204, the wireless digital key 204 capable of communication with an ECU 228 of a vehicle 210. The electronic device detects an indication of the wireless digital key 204 operating in the first frequency band to communicate with the ECU 228 of the vehicle 210. The electronic device generates a first instruction for the wireless digital key 204 or a wireless device of a set of wireless devices 330 within a defined geographic area (e.g., cell 902, cell 904, or cell 906) to switch from a first frequency range to a second frequency range.

In one embodiment, the electronic device is the wireless digital key 204. In this case, the radio manager 416 of the wireless digital key 204 switches the radio 408from the first frequency range to the second frequency range in response to the first instruction.

In one embodiment, the electronic device is one of the wireless devices 330 operating as a radio signal source device 304. In this case, the radio manager 520 of the radio signal source device 304 encodes an information element 528 for a resource manager 524 with the indication of the wireless digital key 204 operating in the first frequency range. The radio signal source device 304 decodes a second instruction from the resource manager 524 to switch the radio 508 to a second frequency range. The resource manager 524 switches the radio 508 of the radio signal source device 304 from the first frequency range to the second frequency range in response to the second instruction.

In one embodiment, the electronic device is an intermediate device, such as device 502. In this case, the radio manager 520 of the device 502 encodes an information element for a resource manager 524 with the indication of the wireless digital key 204 operating in the first frequency range, and decodes a second instruction from the resource manager 524 for the radio signal source device 304 to switch to a second frequency range, and encodes a third instruction for the radio signal source device 304 to switch to the second frequency range.

In various embodiments, the resource manager 524 is part of the wireless device, a base station 218 or base station 908 for a cellular communications system, or a wireless access point 224 for a wireless fidelity (Wi-Fi) network.

In various embodiments, the first frequency range is different from the second frequency range, where the first frequency range includes an ultra-wideband (UWB) channel assigned to the wireless digital key.

In various embodiments, the first frequency range is different from the second frequency range, where the first frequency range includes an ultra-wideband (UWB) channel assigned to the wireless digital key, the UWB channel to comprise 5, 6, 8, 9, 10, 12, or a combination thereof.

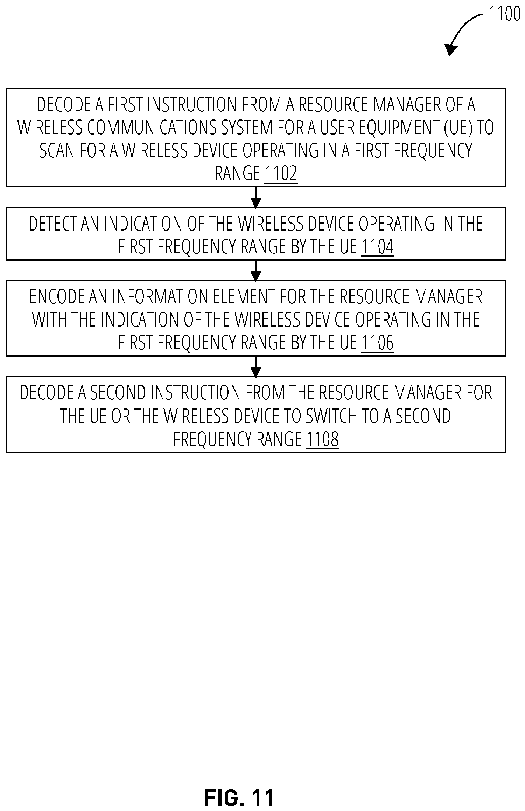

FIG. 11 illustrates an embodiment of a logic message flow 1100. The logic message flow 1100 may be representative of some of the operations executed by one or more embodiments described herein. For example, the logic message flow 1100 may include some of the operations performed by devices or entities within the wireless system 100, wireless system 200, wireless system 300, wireless system 400, wireless system 500, wireless system 700, or wireless system 900. More particularly, the logic message flow 1100 illustrates an example of the wireless system 900 where a wireless digital key 204, a device 502, and a radio signal source device 304, together or separately, implement co-existence and interference mitigation techniques as described herein.

In block 1102, message flow 1100 decodes a first instruction from a resource manager of a wireless communications system for a user equipment (UE) to scan for a wireless device operating in a first frequency range. In block 1104, message flow 1100 detects an indication of the wireless device operating in the first frequency range by the UE. In block 1106, message flow 1100 encodes an information element for the resource manager with the indication of the wireless device operating in the first frequency range by the UE. In block 1108, message flow 1100 decodes a second instruction from the resource manager for the UE or the wireless device to switch to a second frequency range.

By way of example, with reference to the wireless system 900, the UE 910, UE 912, and/or UE 914 decode a first instruction from a resource manager 524 of a wireless communications system for UE 910, UE 912, and/or UE 914 to scan for a wireless device operating in a first frequency range. The wireless device may comprise the digital key 938, digital key 940, and/or digital key 942. The UE 910, UE 912, and/or UE 914 detects an indication of the digital key 938, digital key 940, and/or digital key 942 operating in the first frequency range, encodes an information element 528 for the resource manager 524 with the indication of the digital key 938, digital key 940, and/or digital key 942 operating in the first frequency range, and decodes a second instruction from the resource manager 524 for the UE 910, UE 912, and/or UE 914, other UEs in the cell 902, cell 904, and/or cell 906, or the digital key 938, digital key 940, and/or digital key 942, to switch to a second frequency range.

In one embodiment, the digital key 938, digital key 940, and/or digital key 942 may encode a preamble signal in response to a beacon signal from UE 910, UE 912, UE 914, and/or the base station 908. In this case, the UE 910, UE 912, UE 914, and/or the base station 908 may decode a preamble from the digital key 938, digital key 940, and/or digital key 942 in response to the beacon signal.

In one embodiment, the UE 910, UE 912, and/or the UE 914, or some other UE operating in the cell 902, cell 904 and/or cell 906, may switch from the first frequency range to the second frequency range when the second instruction from the resource manager is for the UE to switch to the second frequency range.

In one embodiment, the UE 910, UE 912, and/or the UE 914 may encode a third instruction to the digital key 938, digital key 940, and/or digital key 942, to switch from the first frequency range to the second frequency range when the second instruction from the resource manager 524 is for the digital key 938, digital key 940, and/or digital key 942 to switch to the second frequency range. The digital key 938, digital key 940, and/or the digital key 942 may receive the encoded third instruction, decode the encoded third instruction, and switch from the first frequency range to the second frequency range. The digital key 938, digital key 940, and/or the digital key 942 may then resend an instruction to the ECU 228 to control an operation of the vehicle 210. Additionally, or alternatively, the digital key 938, digital key 940, and/or the digital key 942 could resend an instruction to the ECU 228 to control an operation of the vehicle 210 without receiving the encoded third instruction, such as when interference 138 is bursty and a user 202 attempts a retry.

In one embodiment, the digital key 938, digital key 940, and/or digital key 942 is a wireless digital key 208 for a vehicle. In one embodiment, the digital key 938, digital key 940, and/or digital key 942 is a UE 206 with a software application operating as a wireless digital key application 230 for a vehicle 210.

In one embodiment, the resource manager 524 is part of a base station 908 for a cellular communications system or a wireless access point 224 for a wireless fidelity (Wi-Fi) network.

In one embodiment, the first frequency range is different from the second frequency range, where the first frequency range includes an ultra-wideband (UWB) channel assigned to the digital key 938, digital key 940, and/or digital key 942.

In one embodiment, the first frequency range is different from the second frequency range, where the first frequency range includes an ultra-wideband (UWB) channel assigned to the digital key 938, digital key 940, and/or digital key 942, the UWB channel to comprise 5, 6, 8, 9, 10, 12, or some combination thereof.

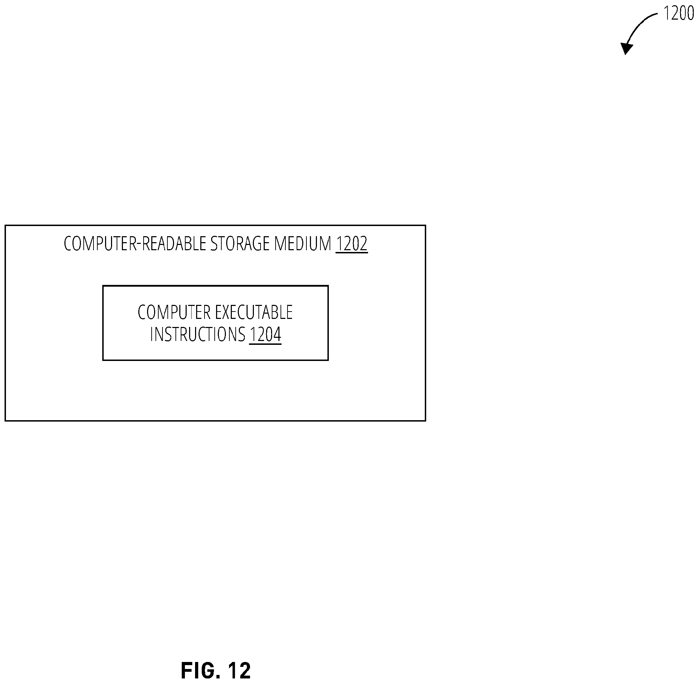

FIG. 12 illustrates an apparatus 1200. Apparatus 1200 may comprise any non-transitory computer-readable storage medium 1202 or machine-readable storage medium, such as an optical, magnetic or semiconductor storage medium. In various embodiments, apparatus 1200 may comprise an article of manufacture or a product. In some embodiments, the computer-readable storage medium 1202 may store computer executable instructions with which circuitry can execute. For example, computer executable instructions 1204 can include instructions to implement operations described with respect to any logic flows described herein. Examples of computer-readable storage medium 1202 or machine-readable storage medium may include any tangible media capable of storing electronic data, including volatile memory or non-volatile memory, removable or non-removable memory, erasable or non-erasable memory, writeable or re-writeable memory, and so forth. Examples of computer executable instructions 1204 may include any suitable type of code, such as source code, compiled code, interpreted code, executable code, static code, dynamic code, object-oriented code, visual code, and the like.

FIG. 13 illustrates an embodiment of a computing architecture 1300. Computing architecture 1300 is a computer system with multiple processor cores such as a distributed computing system, supercomputer, high-performance computing system, computing cluster, mainframe computer, mini-computer, client-server system, personal computer (PC), workstation, server, portable computer, laptop computer, tablet computer, handheld device such as a personal digital assistant (PDA), or other device for processing, displaying, or transmitting information. Similar embodiments may comprise, e.g., entertainment devices such as a portable music player or a portable video player, a smart phone or other cellular phone, a telephone, a digital video camera, a digital still camera, an external storage device, or the like. Further embodiments implement larger scale server configurations. In other embodiments, the computing architecture 1300 may have a single processor with one core or more than one processor. Note that the term "processor" refers to a processor with a single core or a processor package with multiple processor cores. In one embodiment, the computing architecture 1300 is representative of the components of the wireless system 500. More generally, the computing architecture 1300 is configured to implement the logic, systems, logic flows, methods, apparatuses, and functionality described herein with reference to previous figures.

As used in this application, the terms "system" and "component" and "module" are intended to refer to a computer-related entity, either hardware, a combination of hardware and software, software, or software in execution, examples of which are provided by the example computing architecture 1300. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. example connections include parallel interfaces, serial interfaces, and bus interfaces.

As shown in FIG. 13, computing architecture 1300 comprises a system-on-chip (SoC) 1302 for mounting platform components. System-on-chip (SoC) 1302 is a point-to-point (P2P) interconnect platform that includes a first processor 1304 and a second processor 1306 coupled via a point-to-point interconnect 1370 such as an Ultra Path Interconnect (UPI). In other embodiments, the computing architecture 1300 may be of another bus architecture, such as a multi-drop bus. Furthermore, each of processor 1304 and processor 1306 may be processor packages with multiple processor cores including core(s) 1308 and core(s) 1310, respectively. While the computing architecture 1300 is an example of a two-socket (2S) platform, other embodiments may include more than two sockets or one socket. For example, some embodiments may include a four-socket (4S) platform or an eight-socket (8S) platform. Each socket is a mount for a processor and may have a socket identifier. Note that the term platform may refers to a motherboard with components mounted such as the processor 1304 and chipset 1332. Some platforms may include additional components and some platforms may include sockets to mount the processors and/or the chipset. Furthermore, some platforms may not have sockets (e.g. SoC, or the like). Although depicted as a SoC 1302, one or more of the components of the SoC 1302 may also be included in a single die package, a multi-chip module (MCM), a multi-die package, a chiplet, a bridge, and/or an interposer. Therefore, embodiments are not limited to a SoC.

The processor 1304 and processor 1306 can be any of various commercially available processors, including without limitation an Intel^{®} Celeron^{®}, Core^{®}, Core (2) Duo^{®}, Itanium^{®}, Pentium^{®}, Xeon^{®}, and XScale^{®} processors; AMD^{®} Athlon^{®}, Duron^{®} and Opteron^{®} processors; ARM^{®} application, embedded and secure processors; IBM^{®} and Motorola^{®} DragonBall^{®} and PowerPC^{®} processors; IBM and Sony^{®} Cell processors; and similar processors. Dual microprocessors, multi-core processors, and other multi-processor architectures may also be employed as the processor 1304 and/or processor 1306. Additionally, the processor 1304 need not be identical to processor 1306.

Processor 1304 includes an integrated memory controller (IMC) 1320 and point-to-point (P2P) interface 1324 and P2P interface 1328. Similarly, the processor 1306 includes an IMC 1322 as well as P2P interface 1326 and P2P interface 1330. IMC 1320 and IMC 1322 couple the processor 1304 and processor 1306, respectively, to respective memories (e.g., memory 1316 and memory 1318). Memory 1316 and memory 1318 may be portions of the main memory (e.g., a dynamic random-access memory (DRAM)) for the platform such as double data rate type 4 (DDR4) or type 5 (DDR5) synchronous DRAM (SDRAM). In the present embodiment, the memory 1316 and the memory 1318 locally attach to the respective processors (i.e., processor 1304 and processor 1306). In other embodiments, the main memory may couple with the processors via a bus and shared memory hub. Processor 1304 includes registers 1312 and processor 1306 includes registers 1314.

Computing architecture 1300 includes chipset 1332 coupled to processor 1304 and processor 1306. Furthermore, chipset 1332 can be coupled to storage device 1350, for example, via an interface (I/F) 1338. The I/F 1338 may be, for example, a Peripheral Component Interconnect-enhanced (PCIe) interface, a Compute Express Link ^{®} (CXL) interface, or a Universal Chiplet Interconnect Express (UCIe) interface. Storage device 1350 can store instructions executable by circuitry of computing architecture 1300 (e.g., processor 1304, processor 1306, GPU 1348, accelerator 1354, vision processing unit 1356, or the like). For example, storage device 1350 can store instructions for device 502,, devices 512, devices 516, or the like.

Processor 1304 couples to the chipset 1332 via P2P interface 1328 and P2P 1334 while processor 1306 couples to the chipset 1332 via P2P interface 1330 and P2P 1336. Direct media interface (DMI) 1376 and DMI 1378 may couple the P2P interface 1328 and the P2P 1334 and the P2P interface 1330 and P2P 1336, respectively. DMI 1376 and DMI 1378 may be a high-speed interconnect that facilitates, e.g., eight Giga Transfers per second (GT/s) such as DMI 3.0. In other embodiments, the processor 1304 and processor 1306 may interconnect via a bus.

The chipset 1332 may comprise a controller hub such as a platform controller hub (PCH). The chipset 1332 may include a system clock to perform clocking functions and include interfaces for an I/O bus such as a universal serial bus (USB), peripheral component interconnects (PCIs), CXL interconnects, UCIe interconnects, interface serial peripheral interconnects (SPIs), integrated interconnects (I2Cs), and the like, to facilitate connection of peripheral devices on the platform. In other embodiments, the chipset 1332 may comprise more than one controller hub such as a chipset with a memory controller hub, a graphics controller hub, and an input/output (I/O) controller hub.

In the depicted example, chipset 1332 couples with a trusted platform module (TPM) 1344 and UEFI, BIOS, FLASH circuitry 1346 via I/F 1342. The TPM 1344 is a dedicated microcontroller designed to secure hardware by integrating cryptographic keys into devices. The UEFI, BIOS, FLASH circuitry 1346 may provide pre-boot code.

Furthermore, chipset 1332 includes the I/F 1338 to couple chipset 1332 with a high-performance graphics engine, such as, graphics processing circuitry or a graphics processing unit (GPU) 1348. In other embodiments, the computing architecture 1300 may include a flexible display interface (FDI) (not shown) between the processor 1304 and/or the processor 1306 and the chipset 1332. The FDI interconnects a graphics processor core in one or more of processor 1304 and/or processor 1306 with the chipset 1332.

The computing architecture 1300 is operable to communicate with wired and wireless devices or entities via the network interface (NIC) 180 using the IEEE 802 family of standards, such as wireless devices operatively disposed in wireless communication (e.g., IEEE 802.11 over-the-air modulation techniques). This includes Wi-Fi (or Wireless Fidelity), WiMax, and Bluetooth^{™} wireless technologies, 3G, 4G, LTE wireless technologies, among others. Thus, the communication can be a predefined structure as with a conventional network or simply an ad hoc communication between two devices. Wi-Fi networks use radio technologies called IEEE 802.11x (a, b, g, n, ac, ax, etc.) to provide secure, reliable, fast wireless connectivity. A Wi-Fi network can be used to connect computers to each other, to the Internet, and to wired networks (which use IEEE 802.3-related media and functions).

Additionally, accelerator 1354 and/or vision processing unit 1356 can be coupled to chipset 1332 via I/F 1338. The accelerator 1354 is representative of any type of accelerator device (e.g., a data streaming accelerator, cryptographic accelerator, cryptographic coprocessor, an offload engine, etc.). One example of an accelerator 1354 is the Intel^{®} Data Streaming Accelerator (DSA). The accelerator 1354 may be a device including circuitry to accelerate copy operations, data encryption, hash value computation, data comparison operations (including comparison of data in memory 1316 and/or memory 1318), and/or data compression. For example, the accelerator 1354 may be a USB device, PCI device, PCIe device, CXL device, UCIe device, and/or an SPI device. The accelerator 1354 can also include circuitry arranged to execute machine learning (ML) related operations (e.g., training, inference, etc.) for ML models. Generally, the accelerator 1354 may be specially designed to perform computationally intensive operations, such as hash value computations, comparison operations, cryptographic operations, and/or compression operations, in a manner that is more efficient than when performed by the processor 1304 or processor 1306. Because the load of the computing architecture 1300 may include hash value computations, comparison operations, cryptographic operations, and/or compression operations, the accelerator 1354 can greatly increase performance of the computing architecture 1300 for these operations.

The accelerator 1354 may include one or more dedicated work queues and one or more shared work queues (each not pictured). Generally, a shared work queue is configured to store descriptors submitted by multiple software entities. The software may be any type of executable code, such as a process, a thread, an application, a virtual machine, a container, a microservice, etc., that share the accelerator 1354. For example, the accelerator 1354 may be shared according to the Single Root I/O virtualization (SR-IOV) architecture and/or the Scalable I/O virtualization (S-IOV) architecture. Embodiments are not limited in these contexts. In some embodiments, software uses an instruction to atomically submit the descriptor to the accelerator 1354 via a non-posted write (e.g., a deferred memory write (DMWr)). One example of an instruction that atomically submits a work descriptor to the shared work queue of the accelerator 1354 is the ENQCMD command or instruction (which may be referred to as "ENQCMD" herein) supported by the Intel^{®} Instruction Set Architecture (ISA). However, any instruction having a descriptor that includes indications of the operation to be performed, a source virtual address for the descriptor, a destination virtual address for a device-specific register of the shared work queue, virtual addresses of parameters, a virtual address of a completion record, and an identifier of an address space of the submitting process is representative of an instruction that atomically submits a work descriptor to the shared work queue of the accelerator 1354. The dedicated work queue may accept job submissions via commands such as the movdir64b instruction.

Various I/O devices 1360 and display 1352 couple to the bus 1372, along with a bus bridge 1358 which couples the bus 1372 to a second bus 1374 and an I/F 1340 that connects the bus 1372 with the chipset 1332. In one embodiment, the second bus 1374 may be a low pin count (LPC) bus. Various devices may couple to the second bus 1374 including, for example, a keyboard 1362, a mouse 1364 and communication devices 1366.

Furthermore, an audio I/O 1368 may couple to second bus 1374. Many of the I/O devices 1360 and communication devices 1366 may reside on the system-on-chip (SoC) 1302 while the keyboard 1362 and the mouse 1364 may be add-on peripherals. In other embodiments, some of the I/O devices 1360 and communication devices 1366 are add-on peripherals and do not reside on the system-on-chip (SoC) 1302.

FIG. 14 illustrates a block diagram of an example communications architecture 1400 suitable for implementing various embodiments as previously described. The communications architecture 1400 includes various common communications elements, such as a transmitter, receiver, transceiver, radio, network interface, baseband processor, antenna, amplifiers, filters, power supplies, and so forth. The embodiments, however, are not limited to implementation by the communications architecture 1400.

As shown in FIG. 14, the communications architecture 1400 includes one or more clients 1402 and servers 1404. The clients 1402 may implement a client version of the device 502, for example. The servers 1404 may implement a server version of the device 502, for example. The clients 1402 and the servers 1404 are operatively connected to one or more respective client data stores 1408 and server data stores 1410 that can be employed to store information local to the respective clients 1402 and servers 1404, such as cookies and/or associated contextual information.

The clients 1402 and the servers 1404 may communicate information between each other using a communication framework 1406. The communications communication framework 1406 may implement any well-known communications techniques and protocols. The communications communication framework 1406 may be implemented as a packet-switched network (e.g., public networks such as the Internet, private networks such as an enterprise intranet, and so forth), a circuit-switched network (e.g., the public switched telephone network), or a combination of a packet-switched network and a circuit-switched network (with suitable gateways and translators).

(117) The communication framework 1406 may implement various network interfaces arranged to accept, communicate, and connect to a communications network. A network interface may be regarded as a specialized form of an input output interface. Network interfaces may employ connection protocols including without limitation direct connect, Ethernet (e.g., thick, thin, twisted pair 10/500/1000 Base T, and the like), token ring, wireless network interfaces, cellular network interfaces, IEEE 802.11 network interfaces, IEEE 802.16 network interfaces, IEEE 802.20 network interfaces, and the like. Further, multiple network interfaces may be used to engage with various communications network types. For example, multiple network interfaces may be employed to allow for the communication over broadcast, multicast, and unicast networks. When processing requirements dictate a greater amount speed and capacity, distributed network controller architectures may similarly be employed to pool, load balance, and otherwise increase the communicative bandwidth used by clients 1402 and the servers 1404. A communications network may be any one and the combination of wired and/or wireless networks including without limitation a direct interconnection, a secured custom connection, a private network (e.g., an enterprise intranet), a public network (e.g., the Internet), a Personal Area Network (PAN), a Local Area Network (LAN), a Metropolitan Area Network (MAN), an Operating Missions as Nodes on the Internet (OMNI), a Wide Area Network (WAN), a wireless network, a cellular network, and other communications networks.

The components and features of the devices described above may be implemented using any combination of discrete circuitry, application specific integrated circuits (ASICs), logic gates and/or single chip architectures. Further, the features of the devices may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It will be appreciated that the example devices shown in the block diagrams described above may represent one functionally descriptive example of many potential implementations. Accordingly, division, omission or inclusion of block functions depicted in the accompanying figures does not infer that the hardware components, circuits, software and/or elements for implementing these functions would be divided, omitted, or included in embodiments.

A computer-readable storage medium may include instructions that, when executed, cause a system to perform any of the computer-implemented methods described herein.

Some embodiments may be described using the expression "one embodiment" or "an embodiment" along with their derivatives. These terms mean that a particular feature, structure, or characteristic described in connection with the embodiment is included in an embodiment. The appearances of the phrase "in one embodiment" in various places in the specification are not referring to the same embodiment. Moreover, unless otherwise noted the features described above are recognized to be usable together in any combination. Thus, any features discussed separately may be employed in combination with each other unless it is noted that the features are incompatible with each other.

With general reference to notations and nomenclature used herein, the detailed descriptions herein may be presented in terms of program procedures executed on a computer or network of computers. These procedural descriptions and representations are used by those skilled in the art to effectively convey the substance of their work to others skilled in the art.

A procedure is here, and generally, conceived to be a self-consistent sequence of operations leading to a desired result. These operations are those requiring physical manipulations of physical quantities. Usually, though not necessarily, these quantities take the form of electrical, magnetic or optical signals capable of being stored, transferred, combined, compared, and otherwise manipulated. It proves convenient at times, principally for reasons of common usage, to refer to these signals as bits, values, elements, symbols, characters, terms, numbers, or the like. It is to be noted, however, that some of these and similar terms are to be associated with the appropriate physical quantities and are merely convenient labels applied to those quantities.

Further, the manipulations performed are often referred to in terms, such as adding or comparing, which are commonly associated with mental operations performed by a human operator. No such capability of a human operator is necessary, or desirable in cases, in any of the operations described herein, which form part of one or more embodiments. Rather, the operations are machine operations. Useful machines for performing operations of various embodiments include general purpose digital computers or similar devices.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

Various embodiments also relate to apparatus or systems for performing these operations. This apparatus may be specially constructed for the stated purpose or it may comprise a general purpose computer as selectively activated or reconfigured by a computer program stored in the computer. The procedures presented herein are not related to a particular computer or other apparatus. Various general purpose machines may be used with programs written in accordance with the teachings herein, or it may prove convenient to construct more specialized apparatus to perform the stated method steps. The stated structure for a variety of these machines will appear from the description given.

What has been described above includes examples of the disclosed architecture. It is, of course, not possible to describe potentially conceivable combination of components and/or methodologies, but one of ordinary skill in the art may recognize that many further combinations and permutations are possible. Accordingly, the novel architecture is intended to embrace many such alterations, modifications and variations that fall within the spirit and scope of the appended claims.

The various elements of the devices as previously described with reference to FIGS. 1 - __ may include various hardware elements, software elements, or a combination of both. Examples of hardware elements may include devices, logic devices, components, processors, microprocessors, circuits, processors, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. However, determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

One or more aspects of an embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that make the logic or processor. Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

It will be appreciated that the example devices shown in the block diagrams described above may represent one functionally descriptive example of many potential implementations. Accordingly, division, omission or inclusion of block functions depicted in the accompanying figures does not infer that the hardware components, circuits, software and/or elements for implementing these functions would be divided, omitted, or included in embodiments.

A computer-readable storage medium may include instructions that, when executed, cause a system to perform any of the computer-implemented methods described herein.

Some embodiments may be described using the expression "one embodiment" or "an embodiment" along with their derivatives. These terms mean that a particular feature, structure, or characteristic described in connection with the embodiment is included in an embodiment. The appearances of the phrase "in one embodiment" in various places in the specification are not referring to the same embodiment. Moreover, unless otherwise noted the features described above are recognized to be usable together in any combination. Thus, any features discussed separately may be employed in combination with each other unless it is noted that the features are incompatible with each other.

The following examples pertain to further embodiments, from which numerous permutations and configurations will be apparent.

In one example, a method, includes initiate scanning of a first frequency band used by a wireless digital key, the wireless digital key capable of communication with an electronic control unit (ECU) of a vehicle, detecting an indication of the wireless digital key operating in the first frequency band to communicate with the ECU of the vehicle, and generating a first instruction for the wireless digital key or a wireless device within a defined geographic area to switch from a first frequency range to a second frequency range.

The method may also include switching the wireless digital key from the first frequency range to the second frequency range in response to the first instruction.

The method may also include encoding an information element for a resource manager with the indication of the wireless device operating in the first frequency range, decoding a second instruction from the resource manager for the wireless device to switch to a second frequency range, and switching the wireless device from the first frequency range to the second frequency range in response to the second instruction.

The method may also include encoding an information element for a resource manager with the indication of the wireless device operating in the first frequency range, decoding a second instruction from the resource manager for the wireless device to switch to a second frequency range, and encoding a third instruction for the wireless device to switch to the second frequency range.

The method may also include where the resource manager is part of the wireless device, an intermediate device, a base station for a cellular communications system, or a wireless access point for a wireless fidelity (Wi-Fi) network.

The method may also include where the first frequency range is different from the second frequency range, the first frequency range includes an ultra-wideband (UWB) channel assigned to the wireless digital key.

The method may also include where the first frequency range is different from the second frequency range, the first frequency range includes an ultra-wideband (UWB) channel assigned to the wireless digital key, the UWB channel to comprise 5, 6, 8, 9, 10, 12, or a combination thereof.

In one example, a non-transitory computer-readable storage medium, the computer-readable storage medium including instructions that when executed by a computer, cause the computer to initiate scanning of a first frequency band used by a wireless digital key, the wireless digital key capable of communication with an electronic control unit (ECU) of a vehicle, detect an indication of the wireless digital key operating in the first frequency band to communicate with the ECU of the vehicle, and generate a first instruction for the wireless digital key or a wireless device within a defined geographic area to switch from a first frequency range to a second frequency range.

The computer-readable storage medium may also include instructions that when executed by a computer, cause the computer to switch the wireless digital key from the first frequency range to the second frequency range in response to the first instruction.

The computer-readable storage medium may also include instructions that when executed by a computer, cause the computer to encode an information element for a resource manager with the indication of the wireless device operating in the first frequency range, decode a second instruction from the resource manager for the wireless device to switch to a second frequency range, and switch the wireless device from the first frequency range to the second frequency range in response to the second instruction.

The computer-readable storage medium may also include instructions that when executed by a computer, cause the computer to encode an information element for a resource manager with the indication of the wireless device operating in the first frequency range, decode a second instruction from the resource manager for the wireless device to switch to a second frequency range, and encode a third instruction for the wireless device to switch to the second frequency range.

The computer-readable storage medium may also include where the resource manager is part of the wireless device, an intermediate device, a base station for a cellular communications system, or a wireless access point for a wireless fidelity (Wi-Fi) network.

The computer-readable storage medium may also include where the first frequency range is different from the second frequency range, the first frequency range includes an ultra-wideband (UWB) channel assigned to the wireless digital key.

The computer-readable storage medium may also include where the first frequency range is different from the second frequency range, the first frequency range includes an ultra-wideband (UWB) channel assigned to the wireless digital key, the UWB channel to comprise 5, 6, 8, 9, 10, 12, or a combination thereof.

In one example, a computing apparatus includes processing circuitry. The computing apparatus also includes a memory storing instructions that, when executed by the processing circuitry, causes the processing circuitry to initiate scanning of a first frequency band used by a wireless digital key, the wireless digital key capable of communication with an electronic control unit (ECU) of a vehicle, detect an indication of the wireless digital key operating in the first frequency band to communicate with the ECU of the vehicle, and generate a first instruction for the wireless digital key or a wireless device within a defined geographic area to switch from a first frequency range to a second frequency range.

The computing apparatus may also include the processing circuitry to switch the wireless digital key from the first frequency range to the second frequency range in response to the first instruction.

The computing apparatus may also include the processing circuitry to encode an information element for a resource manager with the indication of the wireless device operating in the first frequency range, decode a second instruction from the resource manager for the wireless device to switch to a second frequency range, and switch the wireless device from the first frequency range to the second frequency range in response to the second instruction.

The computing apparatus may also include the processing circuitry to encode an information element for a resource manager with the indication of the wireless device operating in the first frequency range, decode a second instruction from the resource manager for the wireless device to switch to a second frequency range, and encode a third instruction for the wireless device to switch to the second frequency range.

The computing apparatus may also include where the resource manager is part of the wireless device, an intermediate device, a base station for a cellular communications system, or a wireless access point for a wireless fidelity (Wi-Fi) network.

The computing apparatus may also include where the first frequency range is different from the second frequency range, the first frequency range includes an ultra-wideband (UWB) channel assigned to the wireless digital key.

The computing apparatus may also include where the first frequency range is different from the second frequency range, the first frequency range includes an ultra-wideband (UWB) channel assigned to the wireless digital key, the UWB channel to comprise 5, 6, 8, 9, 10, 12, or a combination thereof.

The computing apparatus may also include a radio to transmit and receive radiofrequency (RF) signals.

In one example, a method, includes decoding a first instruction from a resource manager of a wireless communications system for a user equipment (UE) to scan for a wireless device operating in a first frequency range, detecting an indication of the wireless device operating in the first frequency range by the UE, encoding an information element for the resource manager with the indication of the wireless device operating in the first frequency range by the UE, and decoding a second instruction from the resource manager for the UE or the wireless device to switch to a second frequency range.

The method may also include decoding a preamble from the wireless device in response to a beacon signal from the UE.

The method may also include switching from the first frequency range to the second frequency range by the UE when the second instruction from the resource manager is for the UE to switch to the second frequency range.

The method may also include encoding a third instruction from the UE to the wireless device to switch from the first frequency range to the second frequency range by the UE when the second instruction from the resource manager is for the wireless device to switch to the second frequency range.

The method may also include where the wireless device is a wireless digital key for a vehicle.

The method may also include where the wireless device is a UE with a software application operating as a wireless digital key for a vehicle.

The method may also include where the resource manager is part of a base station for a cellular communications system.

The method may also include where the resource manager is a part of a wireless access point for a wireless fidelity (Wi-Fi) network.

The method may also include where the first frequency range is different from the second frequency range, the first frequency range includes an ultra-wideband (UWB) channel assigned to the wireless device.

The method may also include where the first frequency range is different from the second frequency range, the first frequency range includes an ultra-wideband (UWB) channel assigned to the wireless device, the UWB channel to comprise 5, 6, 8, 9, 10, 12, or a combination thereof.

In one example, a non-transitory computer-readable storage medium, the computer-readable storage medium including instructions that when executed by a computer, cause the computer to decode a first instruction from a resource manager of a wireless communications system for a user equipment (UE) to scan for a wireless device operating in a first frequency range, detect an indication of the wireless device operating in the first frequency range by the UE, encode an information element for the resource manager with the indication of the wireless device operating in the first frequency range by the UE, and decode a second instruction from the resource manager for the UE or the wireless device to switch to a second frequency range.

The computer-readable storage medium may also include instructions that when executed by a computer, cause the computer to decode a preamble from the wireless device in response to a beacon signal from the UE.

The computer-readable storage medium may also include instructions that when executed by a computer, cause the computer to switch from the first frequency range to the second frequency range by the UE when the second instruction from the resource manager is for the UE to switch to the second frequency range.

The computer-readable storage medium may also include instructions that when executed by a computer, cause the computer to encode a third instruction from the UE to the wireless device to switch from the first frequency range to the second frequency range by the UE when the second instruction from the resource manager is for the wireless device to switch to the second frequency range.

The computer-readable storage medium may also include where the wireless device is a wireless digital key for a vehicle.

The computer-readable storage medium may also include where the wireless device is a UE with a software application operate as a wireless digital key for a vehicle. The computer-readable storage medium may also include where the resource manager is part of a base station for a cellular communications system.

The computer-readable storage medium may also include where the resource manager is a part of a wireless access point for a wireless fidelity (Wi-Fi) network.

The computer-readable storage medium may also include where the first frequency range is different from the second frequency range, the first frequency range includes an ultra-wideband (UWB) channel assigned to the wireless device.

The computer-readable storage medium may also include where the first frequency range is different from the second frequency range, the first frequency range includes an ultra-wideband (UWB) channel assigned to the wireless device, the UWB channel to comprise 5, 6, 8, 9, 10, 12, or a combination thereof.

In one example, a computing apparatus includes processing circuitry. The computing apparatus also includes a memory storing instructions that, when executed by the processing circuitry, causes the processing circuitry to decode a first instruction from a resource manager of a wireless communications system for a user equipment (UE) to scan for a wireless device operating in a first frequency range, detect an indication of the wireless device operating in the first frequency range by the UE, encode an information element for the resource manager with the indication of the wireless device operating in the first frequency range by the UE, and decode a second instruction from the resource manager for the UE or the wireless device to switch to a second frequency range.

The computing apparatus may also include the processing circuitry to decode a preamble from the wireless device in response to a beacon signal from the UE.

The computing apparatus may also include the processing circuitry to cause a radio to switch from the first frequency range to the second frequency range by the UE when the second instruction from the resource manager is for the UE to switch to the second frequency range.

The computing apparatus may also include the processing circuitry to encode a third instruction from the UE to the wireless device to switch from the first frequency range to the second frequency range by the UE when the second instruction from the resource manager is for the wireless device to switch to the second frequency range.

The computing apparatus may also include where the wireless device is a wireless digital key for a vehicle. The computing apparatus may also include where the wireless device is a UE with a software application operate as a wireless digital key for a vehicle.

The computing apparatus may also include where the resource manager is part of a base station for a cellular communications system.

The computing apparatus may also include where the resource manager is a part of a wireless access point for a wireless fidelity (Wi-Fi) network.

The computing apparatus may also include where the first frequency range is different from the second frequency range, the first frequency range includes an ultra-wideband (UWB) channel assigned to the wireless device.

The computing apparatus may also include where the first frequency range is different from the second frequency range, the first frequency range includes an ultra-wideband (UWB) channel assigned to the wireless device, the UWB channel to comprise 5, 6, 8, 9, 10, 12, or a combination thereof.

The computing apparatus may also include a radio to transmit and receive radiofrequency (RF) signals.

The method, computer-readable storage medium, and computing apparatus of any previous example may further include a 3GPP cellular system performing an aggregated energy detection across some of the 6 GHz wireless car key channels.

In one example, machine-readable storage including machine-readable instructions, when executed, to implement a method or realize an apparatus as described in any preceding example.

In one example, an apparatus includes means to perform a method as described in any preceding example.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

The foregoing description of example embodiments has been presented for the purposes of illustration and description. It is not intended to limit the present disclosure to the precise forms disclosed. Many modifications and variations are possible in light of this disclosure. It is intended that the scope of the present disclosure be limited not by this detailed description, but rather by the claims appended hereto. Future filed applications claiming priority to this application may claim the disclosed subj ect matter in a different manner, and may generally include any set of one or more limitations as variously disclosed or otherwise demonstrated herein.

## Claims

1. A method for reducing interference, comprising:
initiate scanning of a first frequency band used by a wireless digital key, the wireless digital key capable of communication with an electronic control unit (ECU) of a vehicle;
detecting an indication of the wireless digital key operating in the first frequency band to communicate with the ECU of the vehicle; and
generating a first instruction for the wireless digital key or a wireless device within a defined geographic area to switch from a first frequency range to a second frequency range.

2. The method of claim 1, comprising switching the wireless digital key from the first frequency range to the second frequency range in response to the first instruction.

3. The method of any of claims 1 to 2, comprising:
encoding an information element for a resource manager with the indication of the wireless device operating in the first frequency range;
decoding a second instruction from the resource manager for the wireless device to switch to a second frequency range; and
switching the wireless device from the first frequency range to the second frequency range in response to the second instruction.

4. The method of any of claims 1 to 2, comprising:
encoding an information element for a resource manager with the indication of the wireless device operating in the first frequency range;
decoding a second instruction from the resource manager for the wireless device to switch to a second frequency range; and
encoding a third instruction for the wireless device to switch to the second frequency range.

5. The method of any of claims 1 to 4, wherein the resource manager is part of the wireless device, an intermediate device, a base station for a cellular communications system, or a wireless access point for a wireless fidelity (Wi-Fi) network.

6. The method of any of claims 1 to 5, wherein the first frequency range is different from the second frequency range, the first frequency range comprising an ultra-wideband (UWB) channel assigned to the wireless digital key.

7. The method of any of claims 1 to 6, wherein the first frequency range is different from the second frequency range, the first frequency range comprising an ultra-wideband (UWB) channel assigned to the wireless digital key, the UWB channel to comprise 5, 6, 8, 9, 10, 12, or a combination thereof.

8. An apparatus for reducing interference, comprising:
processing circuitry; and
a memory storing instructions that, when executed by the processing circuitry, causes the processing circuitry to:
initiate scanning of a first frequency band used by a wireless digital key, the wireless digital key capable of communication with an electronic control unit (ECU) of a vehicle;
detect an indication of the wireless digital key operating in the first frequency band to communicate with the ECU of the vehicle; and
generate a first instruction for the wireless digital key or a wireless device within a defined geographic area to switch from a first frequency range to a second frequency range.

9. The apparatus of claim 8, the processing circuitry to switch the wireless digital key from the first frequency range to the second frequency range in response to the first instruction.

10. The apparatus of any of claims 8 to 9, the processing circuitry to:
encode an information element for a resource manager with the indication of the wireless device operating in the first frequency range;
decode a second instruction from the resource manager for the wireless device to switch to a second frequency range; and
switch the wireless device from the first frequency range to the second frequency range in response to the second instruction.

11. The apparatus of any of claims 8 to 9, the processing circuitry to:
encode an information element for a resource manager with the indication of the wireless device operating in the first frequency range;
decode a second instruction from the resource manager for the wireless device to switch to a second frequency range; and
encode a third instruction for the wireless device to switch to the second frequency range.

12. The apparatus of any of claims 8 to 11, wherein the resource manager is part of the wireless device, an intermediate device, a base station for a cellular communications system, or a wireless access point for a wireless fidelity (Wi-Fi) network.

13. The apparatus of any of claims 8 to 12, wherein the first frequency range is different from the second frequency range, the first frequency range comprising an ultra-wideband (UWB) channel assigned to the wireless digital key.

14. Machine-readable storage including machine-readable instructions, when executed, to implement a method or realize an apparatus as claimed in any preceding claim.

15. An apparatus comprising means to perform a method as claimed in any preceding claim.
